(19) Europäisches Patentamt
European Patent Office
Office européen des brevets

(11) EP 0 977 445 A2

(12) **EUROPEAN PATENT APPLICATION**

(43) Date of publication:
02.02.2000 Bulletin 2000/05

(51) Int. Cl.⁷: **H04N 13/04**, G02B 27/22

(21) Application number: 99105842.1

(22) Date of filing: 23.03.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 27.07.1998 JP 21111998

(71) Applicant:
**Mixed Reality Systems Laboratory Inc.**
**Yokohama-shi, Kanagawa-ken (JP)**

(72) Inventors:
• **Takikawa, Tomoshi**
  **Mixed Reality Sytems Lab., Inc.**
  **Yokohama-shi, Kanagawa-ken (JP)**

• **Taniguchi, Naosato**
  **Mixed Reality Sytems Lab., Inc.**
  **Yokohama-shi, Kanagawa-ken (JP)**
• **Morishima, Hideki**
  **Mixed Reality Sytems Lab., Inc.**
  **Yokohama-shi, Kanagawa-ken (JP)**

(74) Representative:
**Tiedtke, Harro, Dipl.-Ing. et al**
**Patentanwaltsbüro**
**Tiedtke-Bühling-Kinne & Partner**
**Bavariaring 4**
**80336 München (DE)**

(54) **Stereoscopic image display apparatus**

(57)    A stereoscopic image display apparatus has a display section 110 and a visual point position detecting mechanism for detecting positional information of an observer. The display apparatus uses an optical barrier having a mask pattern formed therein, and makes a patterned beam pass through an optical system to illuminate a display having a discrete pixel structure and displaying a synthetic parallax image by use of scanning lines. The observer stereoscopically observes the image information displayed on the display. The synthetic parallax image is comprised of m parallax images where m is an integer not less than 3. The contents of the synthetic parallax image are changed according to visual point position information outputted from the visual point position detecting mechanism according to positions of visual points of the observer.

FIG. 1

EP 0 977 445 A2

**Description**

BACKGROUND OF THE INVENTION

Field of the Invention

The present invention relates to a stereoscopic image display apparatus and, more particularly, to the apparatus suitably adapted for stereoscopic display of image information on a display device (display) in a television, a video system, a computer monitor, a game machine, and so on and for stereoscopic observation of the image information in a good condition without use of special glasses.

Related Background Art

Conventional methods for observing a stereoscopic image have been suggested heretofore, for example, including a method for observing parallax images based on mutually different polarization states with polarized glasses and a method for guiding a predetermined parallax image out of a plurality of parallax images (visual point images) to the eyes of an observer by use of a lenticular lens.

In the case of the method using the lenticular lens to provide the display of stereoscopic image without special polarized glasses, the lenticular lens is located on the observer side of the display device and directivity is given to each pixel in the parallax image displayed on the display device so as to permit the observer to recognize a stereoscopic image.

The method using the lenticular lens had an advantage of the capability of achieving stereoscopy without use of the polarized glasses but this method had a problem that the screen became rough because the lenticular lens sheet was placed in front of the display.

In connection with it, the inventors suggested the stereoscopic image display apparatus that permitted the observer to observe a good stereoscopic image in a wide visual field, for example, in Japanese Patent Applications No. 8-148611, No. 8-250943, and so on.

Suggested in the applications is the stereoscopic display apparatus having a mask pattern with checkered aperture portions, light source means for illuminating the mask pattern,, and a micro optical element and a transmission type display device different in optical action between in the horizontal direction and in the vertical direction, wherein the display device displays a stripe synthetic image obtained by dividing a parallax image for the right eye and a parallax image for the left eye each into a lot of strip-shape pixels, beams emitted from the light source means are provided with directivity by the micro optical element to illuminate the stripe synthetic image, and the beams are separated into at least two areas so as to permit the observer to visually recognize the stripe synthetic image as a stereoscopic image.

Also suggested is the stereoscopic display apparatus wherein the mask pattern is formed by use of an optical modulator having discrete pixel structure, positions of visual points of the observer (an observation position of the observer) are detected by a visual point detecting mechanism, and the mask pattern is controlled based on the information of the visual point positions so as to obtain a wide stereoscopic area.

SUMMARY OF THE INVENTION

The present invention concerns an improvement in the stereoscopic image display apparatus suggested by the inventors.

A first object of the present invention is to provide a stereoscopic image display apparatus that permits so-called wraparound observation of a display model, by which the observer can observe an image according to the visual point positions even if the observer moves so as to change the positions of the visual points.

A second object of the present invention is to provide a stereoscopic image display apparatus that always permits normal stereoscopy without occurrence of a state of pseudo stereoscopy during movement of the observer even if the observer moves so as to change the visual point positions.

A third object of the present invention is to provide a stereoscopic image display apparatus that permits observation of a stereoscopic image either by switching a synthetic parallax image displayed on the display according to the number of parallax images that can be prepared or by changing a pattern shape of a mask pattern displayed on an optical modulator.

A fourth object of the present invention is to provide a stereoscopic image display apparatus with less jumping of an observation parallax image with movement of the visual points when the observer moves so as to change the positions of the visual points.

A fifth object of the present invention is to provide a stereoscopic image display apparatus improved in deterioration of the resolution in the vertical direction in the display of a synthetic parallax image comprised of plural parallax images.

A stereoscopic image display apparatus of the present invention is:

(1-1) a stereoscopic image display apparatus comprising a visual point position detecting mechanism, said display apparatus being arranged to use an optical barrier in which a plurality of aperture portions and shield portions are arranged horizontally and vertically at a predetermined pitch to form a mask pattern, irradiate said barrier with a beam from light source means to obtain a patterned beam, make the patterned beam pass through an optical system to illuminate a display having a discrete pixel structure and displaying a synthetic parallax image by use of scanning lines, guide beams based on the parallax image displayed on the display, to the right eye and to the left eye of an observer, and permit stereoscopic observation of image information displayed on the display, wherein a predetermined synthetic parallax image comprised of plural parallax images preliminarily prepared as a set of m images where m is an integer not less than 3 is selected and displayed according to visual point position information outputted from the visual point position detecting mechanism.

Particularly, the stereoscopic image display apparatus is characterized:

(1-1-1) in that a plurality of synthetic parallax images are provided and the predetermined synthetic parallax image is selected from the plurality of synthetic parallax images;

(1-1-2) in that said optical system comprises a vertical cylindrical lens array having a plurality of vertical cylindrical lenses having a generating-line along the vertical direction and arrayed in the horizontal direction, and a horizontal cylindrical lens array having a plurality of horizontal cylindrical lenses having a generating-line along the horizontal direction and arrayed in the vertical direction;

(1-1-3) in that a lens pitch of said horizontal cylindrical lens array is m × n times a vertical width of the mask pattern of said optical barrier where n is an integer;

(1-1-4) in that a horizontal width of stripe-shape irradiation areas of the m parallax images projected to an observation position of the observer is set to be equal to or smaller than a distance between the eyes of the observer;

(1-1-5) in that the plural parallax images forming the synthetic parallax image are images observed from visual point positions spaced corresponding to a distance set to be equal to or smaller than a distance between the eyes;

(1-1-6) in that the m parallax images displayed simultaneously, and the other parallax images preliminarily prepared are displayed as being switched according to an output from the visual point position detecting mechanism for detecting positions of visual points of the observer, whereby the parallax images guided to the both eyes of the observer always provide normal stereoscopy for the observer, irrespective of movement of the positions of the visual points;

(1-1-7) in that said visual point position detecting mechanism is arranged to detect on which side the visual points of the observer are located with respect to centers of stripe-shape irradiation areas of the m parallax images projected to the observation position, movement of the observer is predicted based on information thus detected, and the synthetic parallax image is displayed as being switched based thereon; and so on.

Another stereoscopic image display apparatus of the present invention is:
(1-2) a stereoscopic image display apparatus comprising a visual point position detecting mechanism, said display apparatus being arranged to form a mask pattern having a plurality of aperture portions and shield portions arranged horizontally and vertically at a predetermined pitch on a display surface of an optical modulator having a discrete pixel structure, irradiate the optical modulator with a beam from light source means to obtain a patterned beam, make the patterned beam pass through an optical system comprising a vertical cylindrical lens array consisting of vertical cylindrical lenses having a generating-line along the vertical direction and a horizontal cylindrical lens array consisting of horizontal cylindrical lenses having a generating-line along the horizontal direction to illuminate a display having a discrete pixel structure and displaying a synthetic parallax image by use of scanning lines, guide beams based on the parallax image displayed on the display to the right eye and to the left eye of an observer, and permit stereoscopic observation of image information displayed on the display, wherein said synthetic parallax image is comprised of m parallax images where m is an integer not less than 2 and a lens pitch of the horizontal cylindrical lens array is m × n times a vertical width of the aperture portions of the mask pattern where n is an integer.

Particularly, the stereoscopic image display apparatus is characterized:

(1-2-1) in that a pattern shape of the mask pattern of the optical modulator is changed according to visual point position information outputted from the visual point position detecting mechanism according to positions of visual points of the observer;

(1-2-2) in that a horizontal width of stripe-shape irradiation areas of the m parallax images projected to an observation position of the observer is set to be equal to or smaller than a distance between the eyes of the observer;

(1-2-3) in that the plural parallax images forming the synthetic parallax image are images observed from visual point positions spaced corresponding to a distance set to be equal to or smaller than a distance between the eyes;

(1-2-4) in that a pattern shape of the mask pattern of the optical modulator is changed according to an output from the visual point position detecting mechanism for detecting positions of visual points of the observer, whereby the parallax images guided to the both eyes of the observer are controlled so as to provide normal stereoscopy for the observer;

(1-2-5) in that each aperture portion of the mask pattern of the optical modulator is comprised of a plurality of pixels, whereby each stripe-shape irradiation area projected to an observation position is controlled to be divided into a plurality of areas;

(1-2-6) by comprising switching means for changing the contents of the synthetic parallax image according to visual point position information outputted from the visual point position detecting mechanism according to positions of visual points of the observer where the number of parallax images is m or more;

(1-2-7) in that when said m parallax images are projected into m vertical stripe-shape areas at an observation position, a pattern shape of said mask pattern is switched periodically and in synchronism therewith, the parallax images displayed on said display device are displayed as being switched, whereby the parallax images projected into the same areas in the vertical stripe-shape parallax images projected to the observation position are always the same parallax images; and so on.

BRIEF DESCRIPTION OF THE DRAWINGS

Fig. 1 is a diagram to show the external view of Embodiment 1 of the present invention;

Fig. 2 is a block diagram to show the system of Embodiment 1;

Fig. 3 is a schematic diagram to show the main part of the display section of the display of Embodiment 1;

Fig. 4 is an explanatory diagram to explain the mask pattern in Embodiment 1;

Fig. 5 is an explanatory diagram to explain synthesis of image in Embodiment 1;

Fig. 6 is an explanatory diagram to explain the optical action in Embodiment 1;

Fig. 7 is an explanatory diagram to explain the optical action in Embodiment 1;

Fig. 8 is an explanatory diagram to explain the optical action in Embodiment 1;

Fig. 9 is an explanatory diagram to explain the optical action in Embodiment 1;

Fig. 10 is an explanatory diagram to explain the optical action in Embodiment 1;

Fig. 11 is an explanatory diagram to explain the optical action in Embodiment 1;

Fig. 12 is an explanatory diagram to explain the display method of the synthetic parallax image and the mask pattern in Embodiment 1;

Fig. 13 is an explanatory diagram to explain the display method of the synthetic parallax image and the mask pattern in Embodiment 1;

Fig. 14 is an explanatory diagram to explain the display method of the synthetic parallax image and the mask pattern in Embodiment 1;

Fig. 15 is an explanatory diagram to explain the display method of the synthetic parallax image and the mask pattern in Embodiment 1;

Fig. 16 is an explanatory diagram to explain the display method of the synthetic parallax image and the mask pattern in Embodiment 1;

Fig. 17 is an explanatory diagram to explain the display method of the synthetic parallax image and the mask pattern in Embodiment 1;

Fig. 18 is an explanatory diagram to explain the display method of the synthetic parallax image and the mask pattern in Embodiment 1;

Fig. 19 is an explanatory diagram to explain the display method of the synthetic parallax image and the mask pattern in Embodiment 1;

Fig. 20 is an explanatory diagram to explain the display method of the synthetic parallax image and the mask pattern in Embodiment 1;

Fig. 21 is an explanatory diagram to explain the display method of the synthetic parallax image and the mask pattern in Embodiment 1;

Fig. 22 is an explanatory diagram to explain the display method of the synthetic parallax image and the mask pattern in Embodiment 1;

Fig. 23 is an explanatory diagram to explain the display method of the synthetic parallax image and the mask pattern in Embodiment 1;

Fig. 24 is an explanatory diagram to explain the display method of the synthetic parallax image and the mask pattern in Embodiment 1;

Fig. 25 is an explanatory diagram to explain the display method of the synthetic parallax image and the mask pattern in Embodiment 1;

Fig. 26 is an explanatory diagram to explain the display method of the synthetic parallax image and the mask pattern in Embodiment 1;

Fig. 27 is an explanatory diagram to explain the display method of the synthetic parallax image and the mask pattern in Embodiment 1;

Fig. 28 is an explanatory diagram to explain the display method of the synthetic parallax image and the mask pattern in Embodiment 1;

Fig. 29 is an explanatory diagram to explain the display method of the synthetic parallax image and the mask pattern in Embodiment 1;

Fig. 30 is an explanatory diagram to explain the display method of the synthetic parallax image and the mask pattern in Embodiment 1;

Fig. 31 is a diagram to show the external view of Embodiment 2;

Fig. 32 is a block diagram to show the system of Embodiment 2;

Fig. 33 is a schematic diagram to show the main part of the display section of the display of Embodiment 2;

Fig. 34 is an explanatory diagram to explain the display method of the synthetic parallax image and the mask pattern in Embodiment 2;

Fig. 35 is an explanatory diagram to explain the display method of the synthetic parallax image and the mask pattern in Embodiment 2;

Fig. 36 is an explanatory diagram to explain the display method of the synthetic parallax image and the mask pattern in Embodiment 2;

Fig. 37 is an explanatory diagram to explain the display method of the synthetic parallax image and the mask pattern in Embodiment 2;

Fig. 38 is an explanatory diagram to explain the display method of the synthetic parallax image and the mask pattern in Embodiment 2;

Fig. 39 is an explanatory diagram to explain the display method of the synthetic parallax image and the mask pattern in Embodiment 2;

Fig. 40 is an explanatory diagram to explain the display method of the synthetic parallax image and the mask pattern in Embodiment 2;

Fig. 41 is an explanatory diagram to explain the display method of the synthetic parallax image and the mask pattern in Embodiment 2;

Fig. 42 is a schematic diagram to show the main part of the display section of the display of Embodiment 3;

Fig. 43 is an explanatory diagram to explain the display method of the synthetic parallax image and the mask pattern in Embodiment 3;

Fig. 44 is an explanatory diagram to explain the display method of the synthetic parallax image and the mask pattern in Embodiment 3;

Fig. 45 is an explanatory diagram to explain the display method of the synthetic parallax image and the mask pattern in Embodiment 3;

Fig. 46 is an explanatory diagram to explain the display method of the synthetic parallax image and the mask pattern in Embodiment 3;

Fig. 47 is an explanatory diagram to explain the display method of the synthetic parallax image and the mask pattern in Embodiment 3;

Fig. 48 is an explanatory diagram to explain the display method of the synthetic parallax image and the mask pattern in Embodiment 3;

Fig. 49 is an explanatory diagram to explain the display method of the synthetic parallax image and the mask pattern in Embodiment 3;

Fig. 50 is an explanatory diagram to explain the display method of the synthetic parallax image and the mask pattern in Embodiment 3;

Fig. 51 is a schematic diagram to show the main part of the display section of the display of Embodiment 4;

Fig. 52 is an explanatory diagram to explain the mask pattern in Embodiment 4;

Fig. 53 is an explanatory diagram to explain synthesis of image in Embodiment 4;

Fig. 54 is an explanatory diagram to explain the optical action in Embodiment 4;

Fig. 55 is an explanatory diagram to explain the optical action in Embodiment 4;

Fig. 56 is an explanatory diagram to explain the optical action in Embodiment 4;

Fig. 57 is an explanatory diagram to explain the optical action in Embodiment 4;

Fig. 58 is an explanatory diagram to explain the display method of the synthetic parallax image and the mask pattern in Embodiment 4;

Fig. 59 is an explanatory diagram to explain the display method of the synthetic parallax image and the mask pattern in Embodiment 4;

Fig. 60 is an explanatory diagram to explain the display method of the synthetic parallax image and the mask pattern in Embodiment 4;

Fig. 61 is an explanatory diagram to explain the display method of the synthetic parallax image and the mask pattern in Embodiment 4;

Fig. 62 is an explanatory diagram to explain the display method of the synthetic parallax image and the mask pattern in Embodiment 4;

Fig. 63 is an explanatory diagram to explain the display method of the synthetic parallax image and the mask pattern in Embodiment 4;

Fig. 64 is an explanatory diagram to explain the display method of the synthetic parallax image and the mask pattern in Embodiment 4;

Fig. 65 is an explanatory diagram to explain the optical action in Embodiment 5;

Fig. 66 is an explanatory diagram to explain the optical action in Embodiment 5;

Fig. 67 is an explanatory diagram to explain the optical action in Embodiment 5;

Fig. 68 is an explanatory diagram to explain the optical action in Embodiment 5;

Fig. 69 is an explanatory diagram to explain the optical action in Embodiment 5;

Fig. 70 is an explanatory diagram to explain the optical action in Embodiment 5;

Fig. 71 is a block diagram to show the system of Embodiment 6;

Fig. 72 is an explanatory diagram to explain the display method of the synthetic parallax image and the mask pattern in Embodiment 6;

Fig. 73 is an explanatory diagram to explain the display method of the synthetic parallax image and the mask pattern in Embodiment 6;

Fig. 74 is an explanatory diagram to explain the display method of the synthetic parallax image and the mask pattern in Embodiment 6; and

Fig. 75 is an explanatory diagram to explain the display method of the synthetic parallax image and the mask pattern in Embodiment 6.

DETAILED DESCRIPTION OF THE PREFERRED EMBODIMENTS

[Embodiment 1]

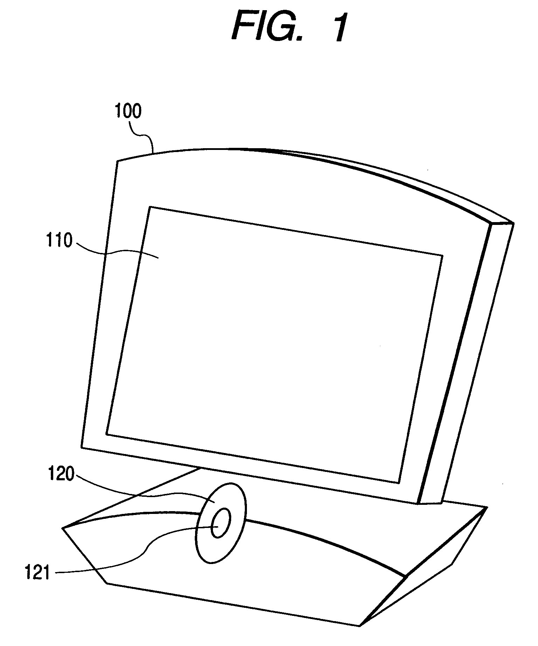

Embodiment 1 of the stereoscopic image display apparatus of the present invention will be described referring to Fig. 1 to Fig. 30.

Fig. 1 is a diagram to show the external view of the main part of present Embodiment 1. In the same figure, reference numeral 100 designates the main body to show the whole of the present apparatus. Numeral 110 designates a display section of the display. Numeral 120 represents a visual point position detecting mechanism (detecting mechanism) for detecting the positions of the visual points of the observer (the positions of the eyes or the position of the head). Numeral 121 denotes a camera lens of the detecting mechanism 120.

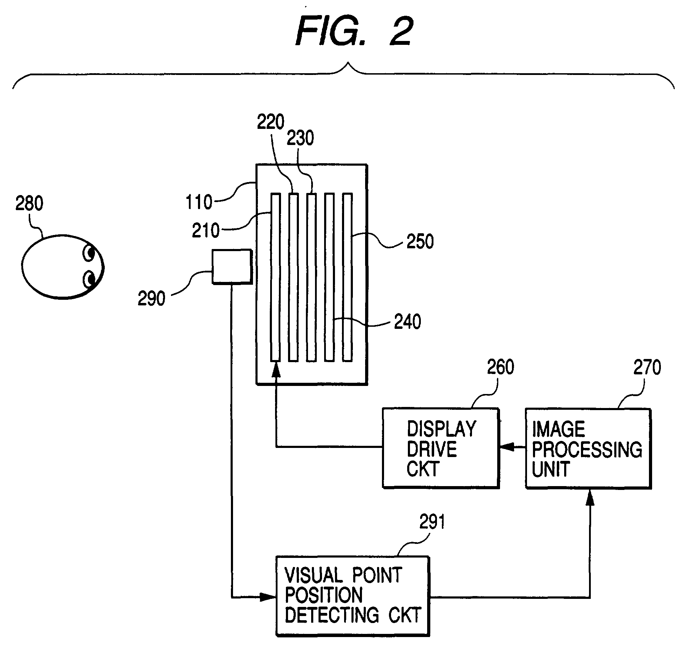

Fig. 2 is a block diagram of the main part to explain the system of Embodiment 1. In the same figure the display section 110 has a transmission type display device (display) 210 of the liquid crystal or the like for displaying a stereoscopic image with parallax (a parallax image), an optical barrier 240 having a checkered mask pattern, and a back light source (light source means) 250, and two lenticular lenses 220, 230 having respective generating-lines along orthogonal directions are disposed between the display 210 and the optical barrier 240.

A display drive circuit 260 drives the display 210, based on a signal from an image processing unit 270. Numeral 280 denotes an observer who is observing the display 210.

Numeral 290 indicates a visual point position detecting sensor forming the visual point position detecting mechanism 120 for detecting the positions of the visual points of the observer 280, and 291 a visual point position detecting circuit from which the image processing unit 270 captures the information of the visual point positions and processes the parallax image displayed on the display 210, based thereon.

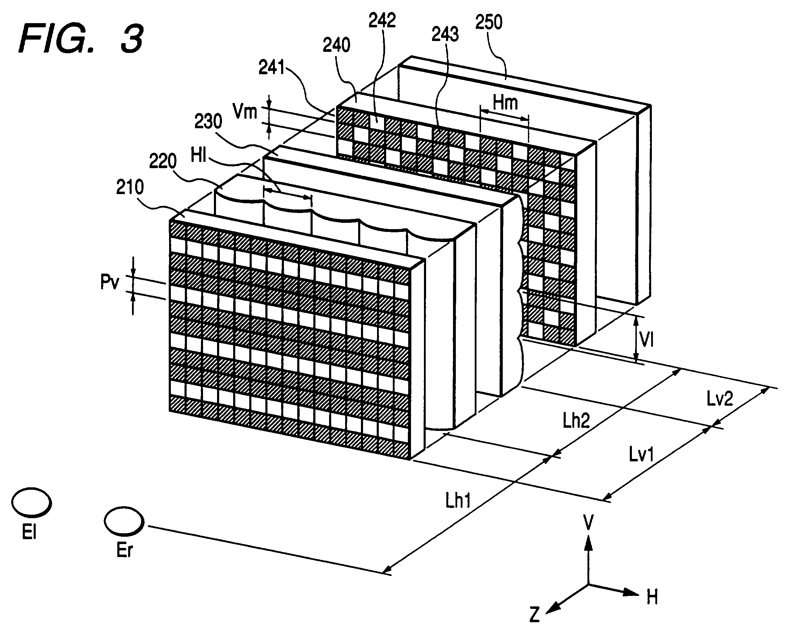

Fig. 3 is a schematic diagram to show the main part of the display section 110 of Fig. 2. In Fig. 3, numeral 250 represents the back light source (light source means) and 240 the optical barrier which is comprised of a mask pattern 241 consisting of predetermined aperture portions 242 and shield portions 243.

Numeral 230 stands for a horizontal lenticular lens (horizontal cylindrical lens array) having the generating-line extending along the horizontal direction H, which is comprised of a lot of plano-convex, horizontal cylindrical lenses arranged in the vertical direction V. For the horizontal lenticular lens 230, the lens curvature is set so as to form images of the aperture portions and shield portions of the mask pattern 241 on the image display surface of the display 210.

The lens pitch (width) Vl of the horizontal lenticular lens 230 is set to be equal to m times the vertical pitch Vm of the aperture portions 242 of the mask pattern 241 where m is the number of parallax images displayed on the display device 241, which will be described hereinafter. This figure shows an example of m = 3.

Numeral 220 represents a vertical lenticular lens (vertical cylindrical lens array) having the generating-line along the vertical direction V, which is composed of a lot of plano-convex, vertical cylindrical lenses arranged in the horizontal direction H. For the vertical lenticular lens 220, the lens curvature is set so as to form an image of the mask pattern 241 at the observation position by each cylindrical lens forming the lenticular lens 220.

The horizontal pitch Hm of the aperture portions 242 and the shield portions 243 of the mask pattern 241 corresponds to one pitch (width) Hl of the vertical cylindrical lenses of the vertical lenticular lens 220.

Numeral 210 indicates the display device (display) for displaying an image, which is comprised of a transmissive liquid crystal element or the like. In Fig. 3, a glass cover, a polarizing plate, electrodes, etc. of the display 210 are omitted from the illustration and the display image on the display surface and the pattern shape of the mask pattern 241 are schematically indicated.

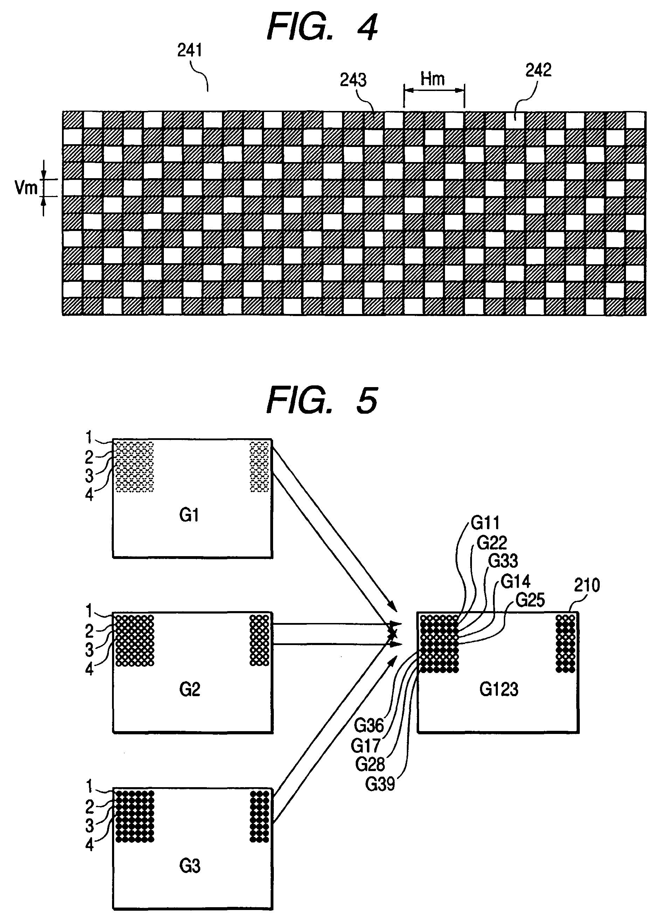

Er and El represent the right and left eyes, respectively, of the observer 280 observing the image. Now, let us explain the mask pattern 241 consisting of the aperture portions and the shield portions formed in the optical barrier 240, referring to Fig. 4.

Fig. 4 is a front view of the mask pattern 241 illustrated in Fig. 3. As illustrated in the same figure, the mask pattern 241 is composed of the aperture portions 242 and the shield portions 243 having the horizontal pitch Hm and the vertical width Vm.

Next described with Fig. 5 is a synthetic parallax image displayed on the display device 210. In the same figure G1, G2, G3 indicate three parallax images corresponding to aforementioned m = 3, and these parallax images are processed by the image processing unit 270 illustrated in Fig. 2 in such a manner that they are divided into a lot of stripe images of horizontal stripes as illustrated and the stripe images G1i, G2i, G3i obtained from the parallax images G1, G2, G3 are rearranged every scanning line to obtain the synthetic parallax image G123.

In cases where m is not equal to 3, the synthetic parallax image is also prepared similarly from m parallax images according to m. Data of the synthetic parallax image prepared in this way is supplied to the display drive circuit 260 of Fig. 2 and is displayed on the display device 210.

The parallax images G1, G2, G3 correspond to images photographed from respective visual point positions spaced at the spacing of eye distance (distance between the eyes) E. Including the parallax images used in the description hereinafter, the parallax images

... G4, G3, G2, G1, G0, G-1, G-2,... are images obtained by the same method.

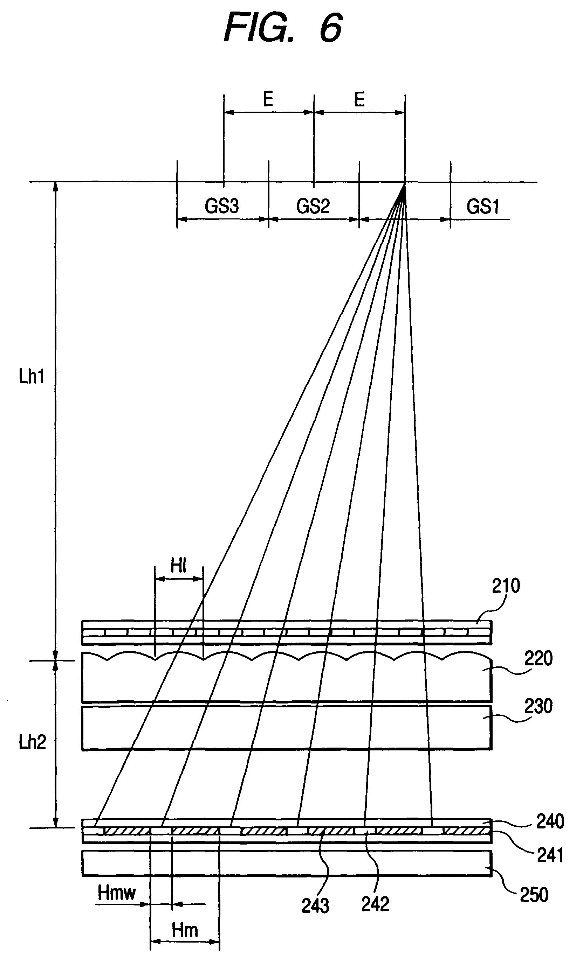

The operation of stereoscopic image display will be described referring to Fig. 6 to Fig. 11.

Fig. 6 is a horizontal sectional view (HZ sectional view) of the display section 110. In the same figure, the light from the back light source 250 comes out of the aperture portions 242 of the mask pattern 241 in the optical barrier 240 to pass through the horizontal cylindrical lens 230 (though the horizontal lenticular lens has no specific optical action in this cross section).

Through each cylindrical lens forming the vertical lenticular lens 220, the transmitted beams from the aperture portions 242 of the mask pattern 241 are radiated to be focused as a beam of a vertical stripe at the observation position of the observer.

The beams are modulated by the synthetic parallax image displayed on the display device 210 disposed between the vertical lenticular lens 220 and the observer and in the cross section of Fig. 6, they pass, for example, the stripe images of lines G11, G14, G17,... synthesized from the parallax image G1 illustrated in Fig. 5, to be radiated into a radiated parallax image area GS1 at the observation position.

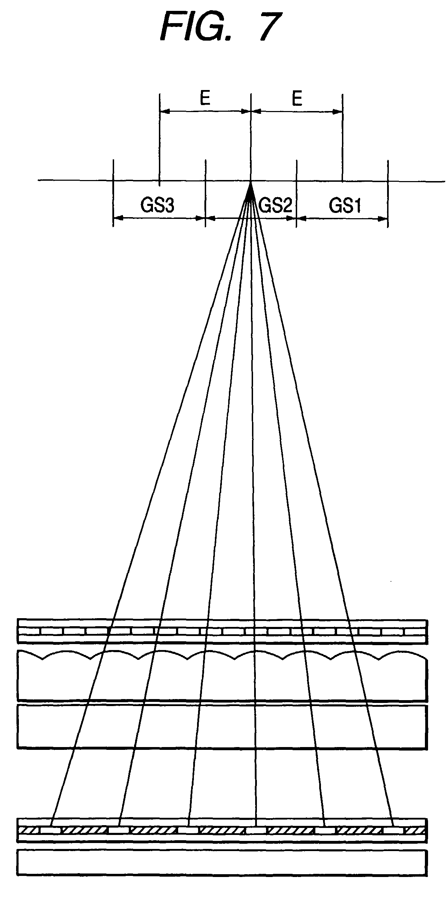

Likewise, in the cross section corresponding to a scanning line immediately below the scanning line of Fig. 6, the aperture portions 242 of the mask pattern 241 are shifted by one aperture, so that the beams passing through the aperture portions 242 are radiated into a radiated parallax image area GS2 at the observation position, as illustrated in Fig. 7.

These beams are modulated by the synthetic parallax image displayed on the display device 210 disposed between the vertical lenticular lens 220 and the observer and in this cross section, they are the beams passing through the stripe images of lines G22, G25, G28,... synthesized from the parallax image G2 illustrated in Fig. 5.

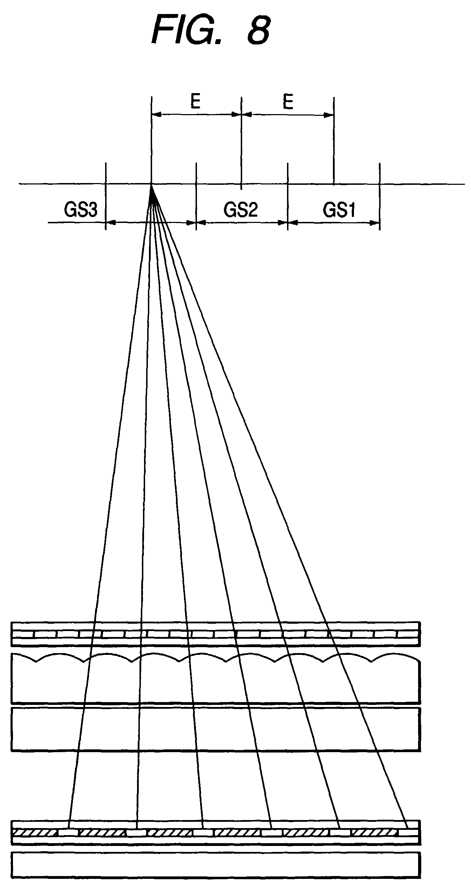

Likewise, in the cross section corresponding to a scanning line immediately below the scanning line of Fig. 7, the beams are radiated into a radiated parallax image area GS3 at the observation position, as illustrated in Fig. 8. These beams are the beams passing through the stripe images of lines G33, G36, G39,... synthesized from the parallax image G3 illustrated in Fig. 5.

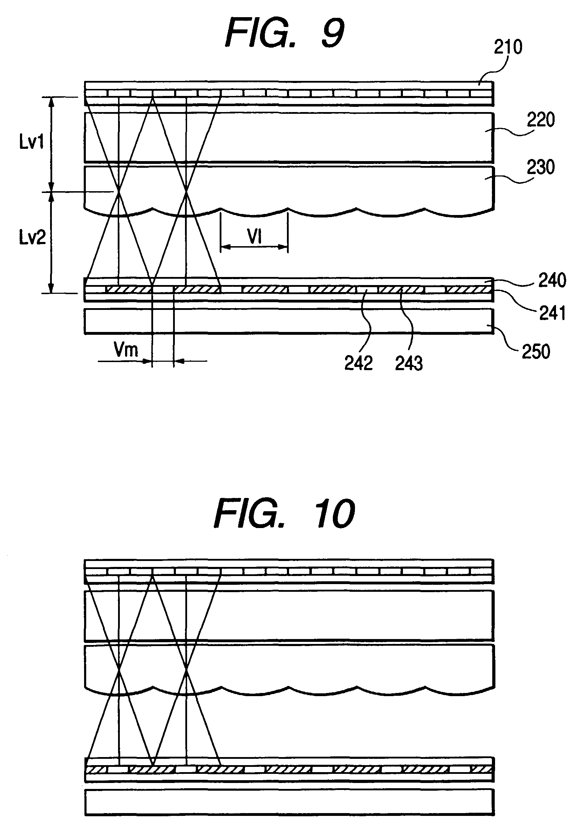

Fig. 9 is a vertical sectional view (ZV sectional view) of the display section 110 for display of stereoscopic image. In this cross section the aperture portions 242 of the mask pattern 241 illuminated by the back light source 250 are arranged so that images of the aperture portions 242 of the optical barrier 240 are formed at a magnification corresponding to the pixel width of the display device 210 on the image display surface of the display device 210 by the action of the horizontal lenticular lens 230, and the positions of the optical barrier 240, the display device 210, and the horizontal lenticular lens 230 are set appropriately so as to radiate only the element stripe images of the parallax image G1.

Likewise, in the pixel column one pixel next to that of Fig. 9, only the element stripe images of the parallax image G2 are radiated as illustrated in Fig. 10.

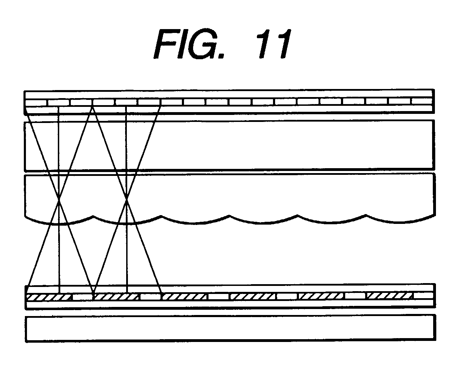

Likewise, in the pixel column one pixel next to that of Fig. 10, only the element stripe images of the parallax image G3 are radiated as illustrated in Fig. 11.

When the parallax images G1, G2, G3 are the parallax images corresponding to the eye distance and the observer places the both eyes in these radiated parallax image areas, the observer can observe these parallax images separately and independently by the left and right eyes, thus achieving stereoscopy accordingly.

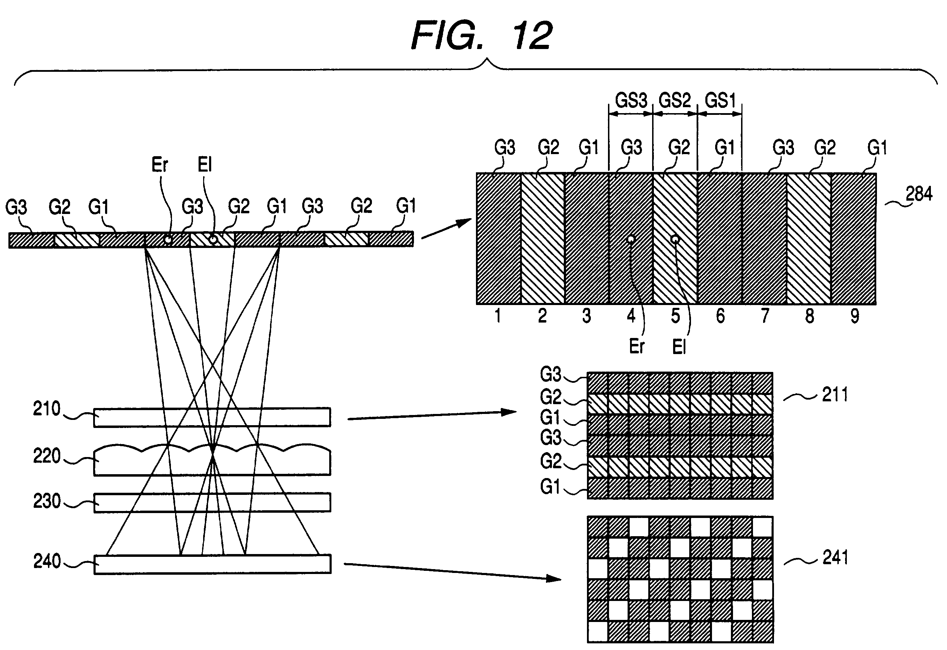

Fig. 12 to Fig. 16 are explanatory diagrams of the stereoscopy. In Fig. 12, the left figure is a horizontal sectional view of the display 110 and the right figure includes the mask pattern 241 of the barrier 240, the synthetic parallax image 211 displayed on the display 210, and a radiated parallax image 284 at the observation position. The radiated parallax image 284 is comprised of the parallax images G1, G2, G3 and Fig. 12 shows a state in which the left and right eyes El, Er of the observer are located at the positions of the parallax images G2, G3.

For easy understanding of the description, the same locations of respective areas in the radiated parallax image will be denoted by the same addresses 1 to 9.

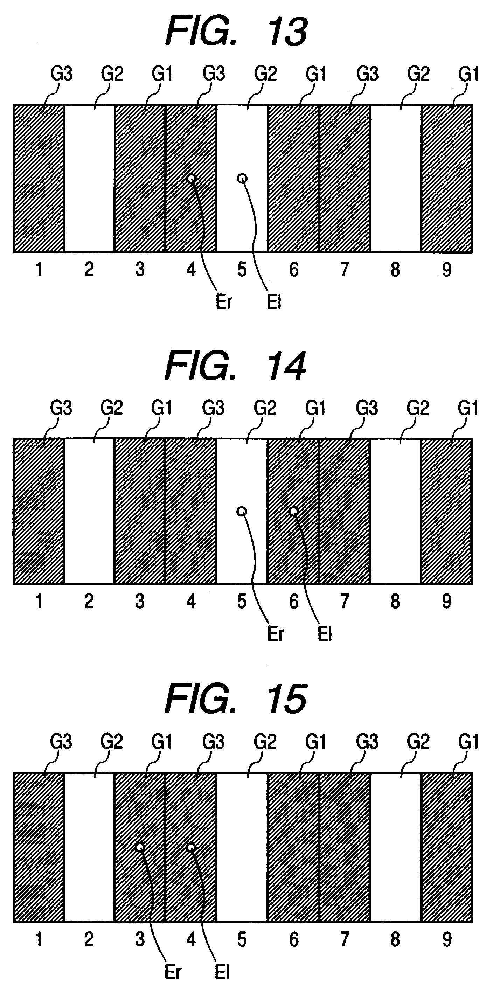

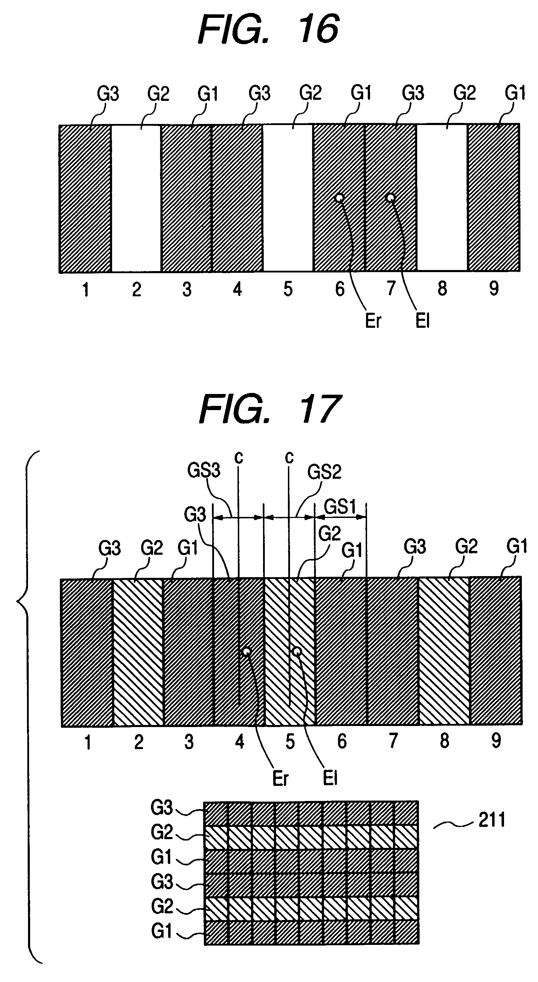

Fig. 13 is a diagram to show only the radiated parallax image 284 of Fig. 12 again. Fig. 14 shows a state in which after the observer moved to the right, the left and right eyes are in the areas of the parallax images G1, G2, respectively. The states of Fig. 13 and Fig. 14 are those permitting normal stereoscopy for the observer. If the observer moves to the left or to the right from these states and if the left and right eyes El, Er are located in the areas of G3, G1, respectively, as illustrated in Fig. 15 or Fig. 16, the observer is in the state of pseudo stereoscopy in which the observation of the parallax images is reverse, and normal stereoscopic observation is impossible.

Now, let us explain the structural conditions of the optical system in the horizontal cross section, referring to Fig. 6. In the present specification the distances between the optical elements are handled as reduced distances. The reduced distances are so-called optical distances, each obtained by reducing a distance between two optical elements to a value in air with a reference point at the image display surface in the case of the display device, at the mask pattern display surface in the case of the optical barrier, or at the principal point on the side where the distance is intended to measure in the case of the lenticular lenses.

As illustrated in Fig. 6, let Lh2 be distance between the vertical lenticular lens 220 and the mask pattern 241 (an optical spacing as a reduced value in air from the distance between the mask-side principal point of the vertical lenticular lens 220 and the mask pattern 241), Lh1 be a distance from the predetermined observation position to the vertical lenticular lens 220 (an optical spacing as a reduced value in air from the distance between the observation position and the observer-side principal point of the vertical lenticular lens 220), Hmw be the horizontal width of the aperture portions 242 of the mask pattern 241, Hm be the horizontal pitch between adjacent aperture portions, Hl be the pitch (width) of the vertical cylindrical lenses composing the vertical lenticular lens 220, E be the spacing between the left and right eyes of the observer, and m be the number of parallax images forming the synthetic parallax image. Then the apparatus is constructed so as to satisfy the following conditions.

$$(m - 1)*E/Hm = Lh1/Lh2 \qquad \text{(Eq. 1)}$$

$$Lh1/(Lh1 + Lh2) = Hl/Hm \qquad \text{(Eq. 2)}$$

$$Hmw*m = Hm \qquad \text{(Eq. 3)}$$

Fig. 6 shows the example of m = 3.

Next described is the function to enable the observer to always observe a normal stereoscopic image without occurrence of the state of pseudo stereoscopy even with change in the observation position of the observer. In the description heretofore, the normal stereoscopy was possible as long as the left and right eyes of the observer were in the respective areas in which the parallax images corresponding to the respective eyes were radiated; otherwise the eyes were in the state of pseudo stereoscopy and the normal stereoscopy was thus impossible.

In order to overcome this drawback, Embodiment 1 is arranged to capture the visual point position information of the observer 280 obtained through the visual point position detecting sensor 290 and switch the parallax image displayed on the display 210 according to the positions of the visual points by the image processing unit 270, as illustrated in the block diagram of Fig. 2.

The best method for the present embodiment is to detect the positions of the eyes of the observer or the positions of the pupils of the eyes as the positions of the visual points of the observer 280. There are various suggestions heretofore on the methods for detecting the positions of the human eyes or the methods for detecting the positions of the pupils, and they can be applied to the apparatus of the present invention. For example, Japanese Laid-open Patent Application No. 2-50145 discloses an embodiment arranged to radiate infrared light to a man, photograph the observer with a TV camera, and detect the positions of the eyes from motion of the observer's head.

Further, USP No. 5,218,387, USP No. 5,231,674, etc. disclose methods for photographing the face and extracting reflection images of the corneas or images of the pupils of the observer's eyes by image processing to detect the positions of the pupils.

Enlargement of the stereoscopic region of Embodiment 1 can be achieved by changing the display contents of the parallax image displayed on the display device according to the positions of the visual points and in that case, there are a first method applied where a lot of parallax images can be prepared and a second method applied where the number of parallax images that can be prepared is limited.

Fig. 17 to Fig. 22 are explanatory diagrams concerning the first method. Fig. 17 shows the state of Fig. 13 where the left and right eyes El, Er are located in the areas of the parallax images G2, G3, respectively, which was referred to previously, and shows the positions of the left and right eyes in detail.

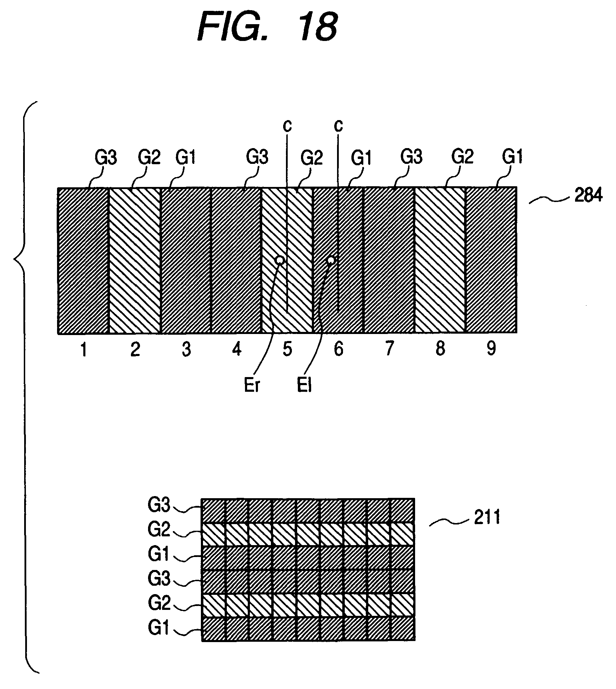

Specifically, the left and right eyes El, Er are located on the right side of the center lines c of the areas of the parallax images G2, G3. In the range from this state to the state where the both eyes are located on the left side of the center lines of the parallax images G1, G2 in Fig. 18, the parallax images G1, G2, G3 as shown in the synthetic parallax image 211 are displayed in the display device 210.

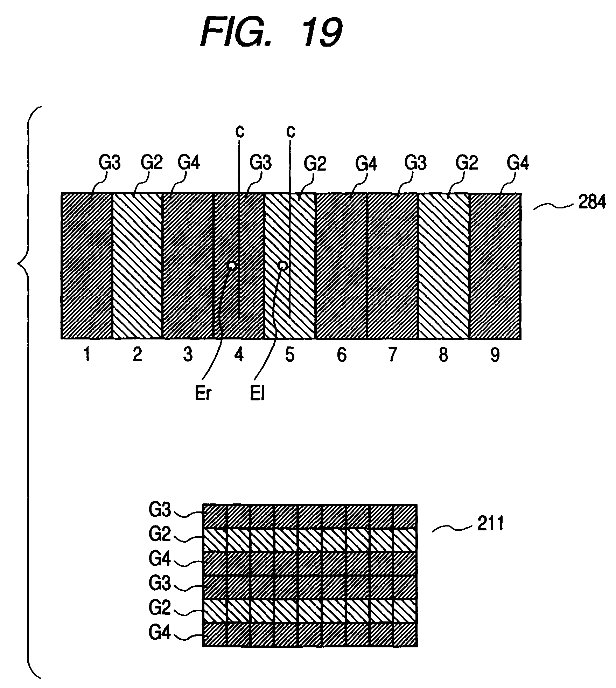

When the observer moves and, for example, when the left and right eyes El, Er move into the left side of the center lines c of the parallax images G2, G3 as illustrated in Fig. 19, the parallax image G4 immediately next to the parallax image G3 is displayed at the stripe pixel positions where the parallax image G1 was present before, in the synthetic parallax image 211 on the display. In the range up to a state in which the left and right eyes El, Er are located on the right side of the center lines of the parallax images G3, G4 (not illustrated), the parallax images G2, G3, G4 illustrated in Fig. 19 are displayed as the synthetic parallax image 211 on the display device 210.

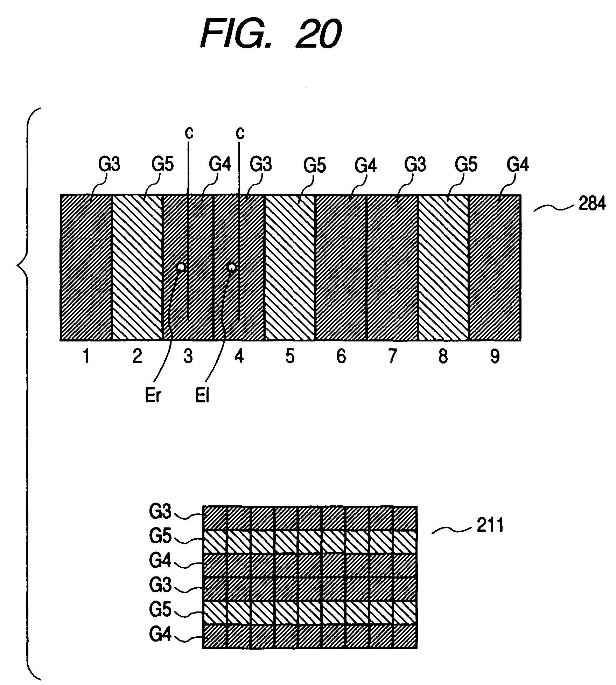

Likewise, when the observer moves further and when the left and right eyes El, Er move into the left side of the center lines c of the parallax images G3, G4 as illustrated in Fig. 20, the parallax image G5 immediately next to the parallax image G4 is displayed at the stripe pixel positions where the parallax image G2 was present before, in the display image 211 on the display.

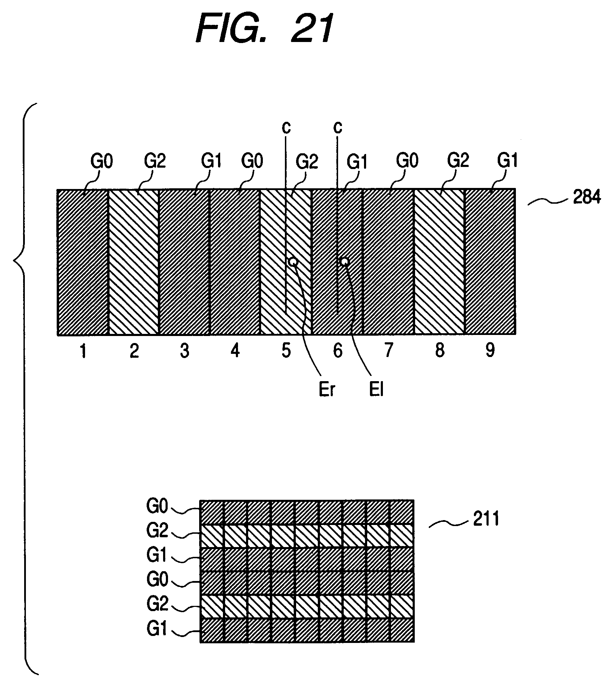

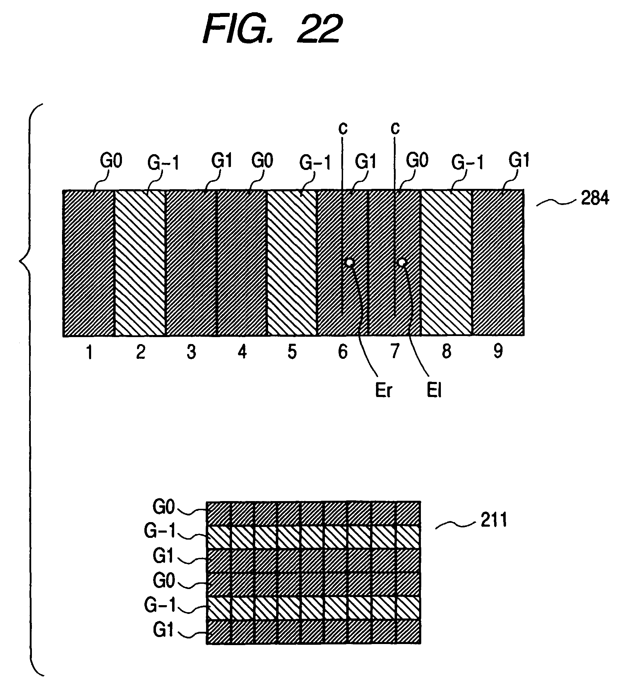

If the observer moves to the right the parallax image G0 or G-1 one next will be displayed in order as illustrated in Fig. 21 or in Fig. 22.

As described above, the stereoscopic observation becomes possible without occurrence of the pseudo stereoscopy by preliminarily preparing a lot of parallax images and successively displaying three images as a set according to the positions of the visual points. In this case, the so-called wraparound display capable of displaying the side faces of a display model also becomes possible by properly selecting the parallax images.

The above exemplified the example in which the parallax images were three images displayed simultaneously, and the operation is similar thereto in cases where the parallax images displayed at one time are four or more images.

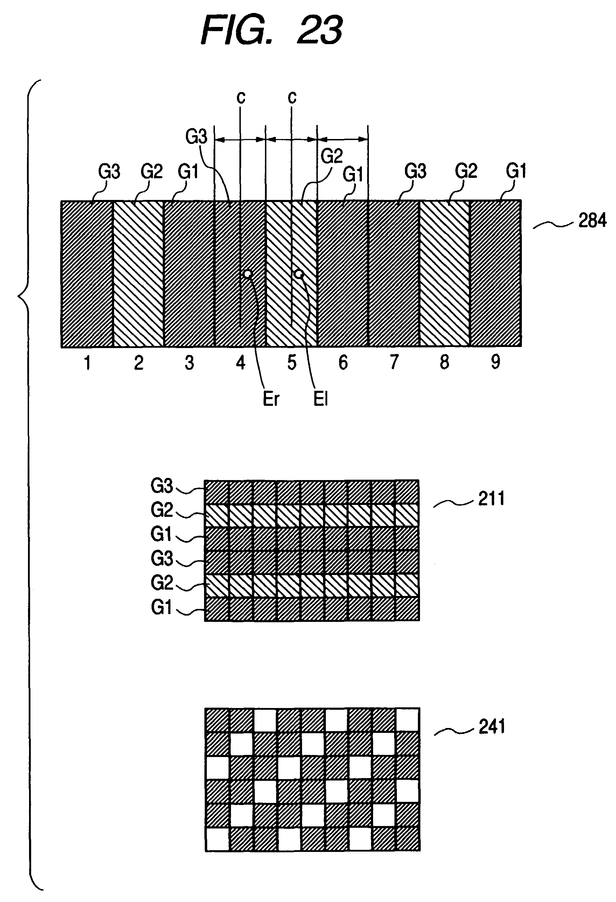

Next described referring to Fig. 23 to Fig. 30 is the second method in which the number of parallax images that can be prepared is limited, for example, in the case of three images.

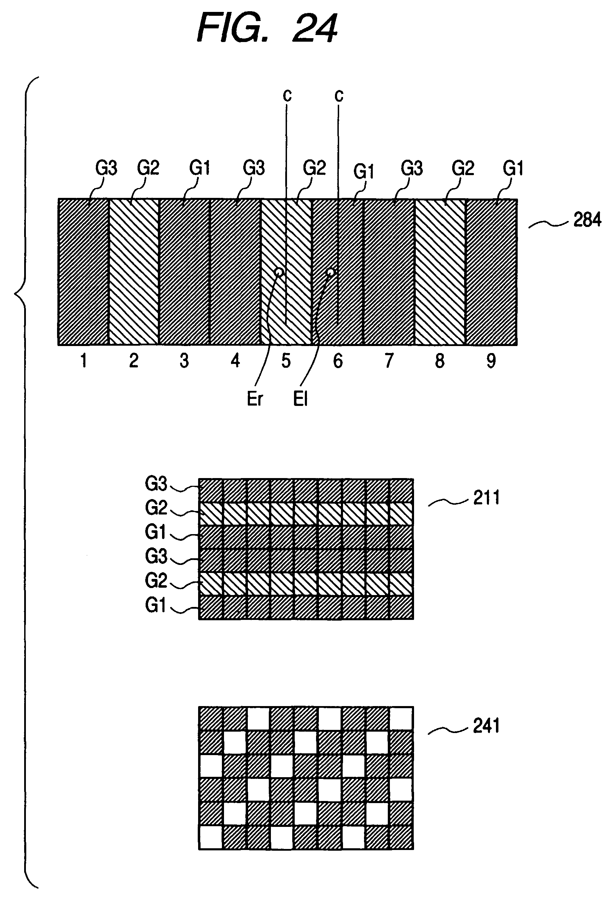

Fig. 23 is the state of Fig. 17, referred to previously, where the left and right eyes El, Er are in the areas of the parallax images G2, G3, respectively, and also shows the state of the mask pattern at this time. As described before in the first method, the synthetic parallax image 211 illustrated is displayed in the display device 210 in the range from the state of Fig. 23 where the left and right eyes El, Er are located on the right side of the center lines c of the areas of the parallax images G2, G3 to the state of Fig. 24 where the left and right eyes are located on the left side of the center lines of the parallax images G1, G2.

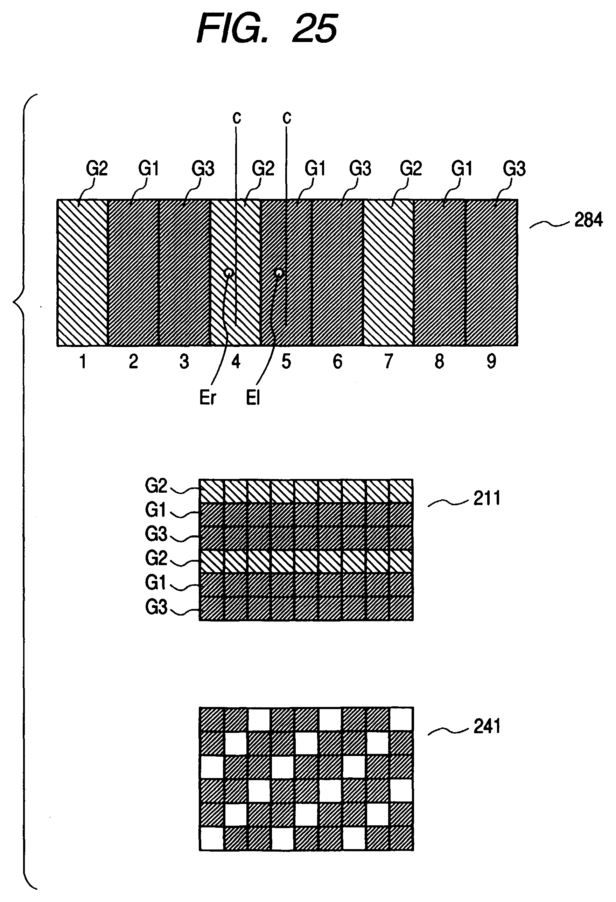

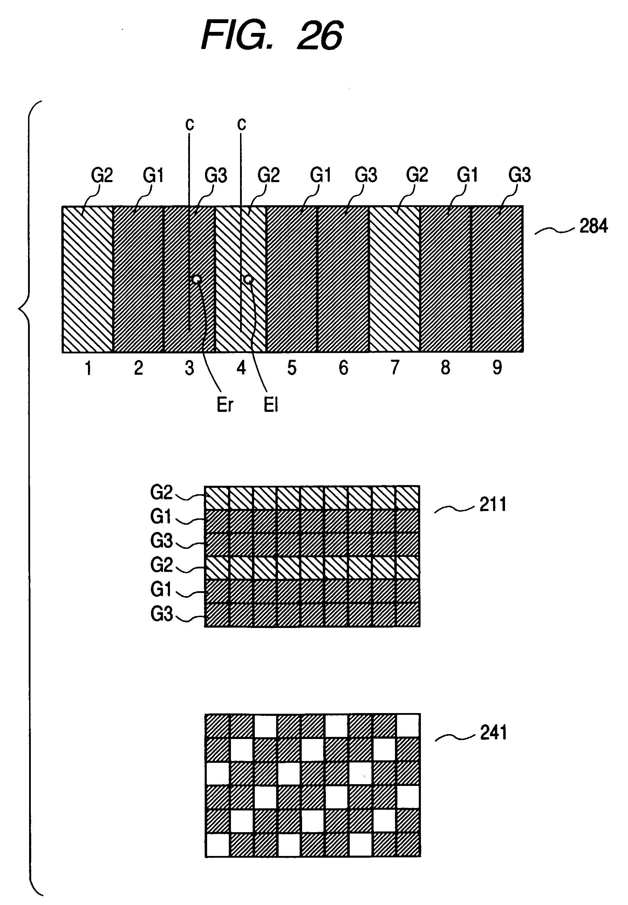

When the observer moves, for example, to the left and when the left and right eyes El, Er are located at the positions illustrated in Fig. 25 or Fig. 26, the parallax image G1 is displayed at the stripe pixel positions where the parallax image G2 was present before and the parallax image G2 at the stripe image positions where the parallax image G3 was present before, in the synthetic parallax image 211 in the display.

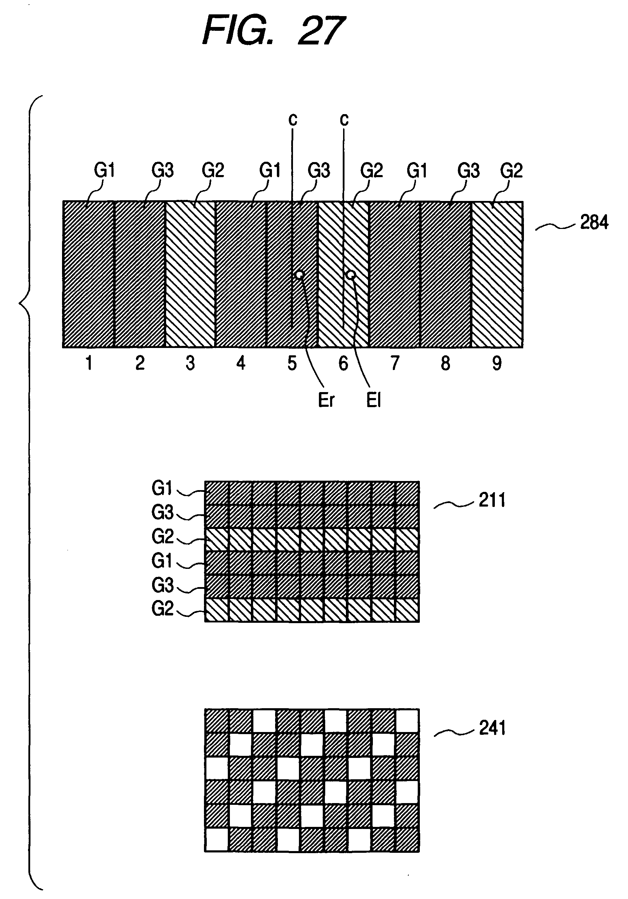

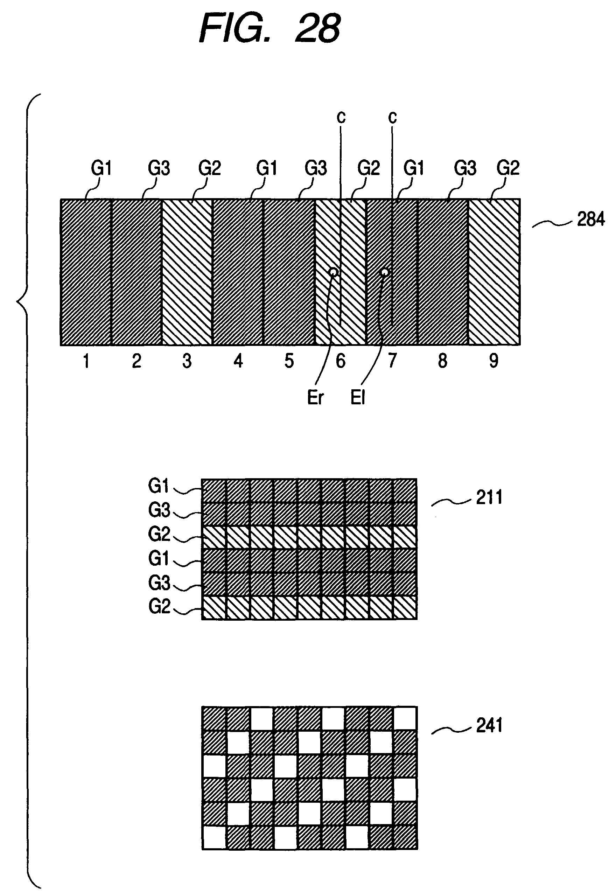

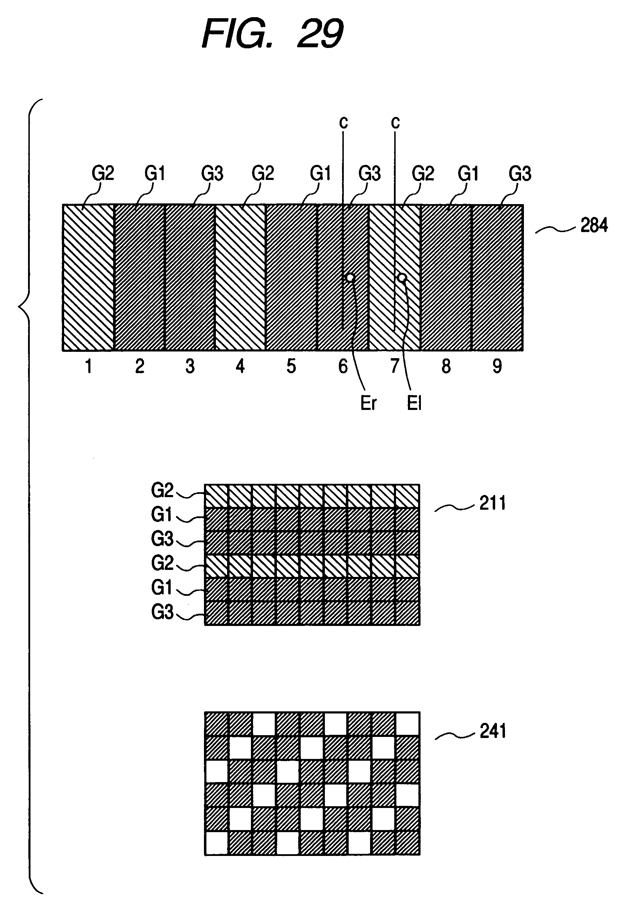

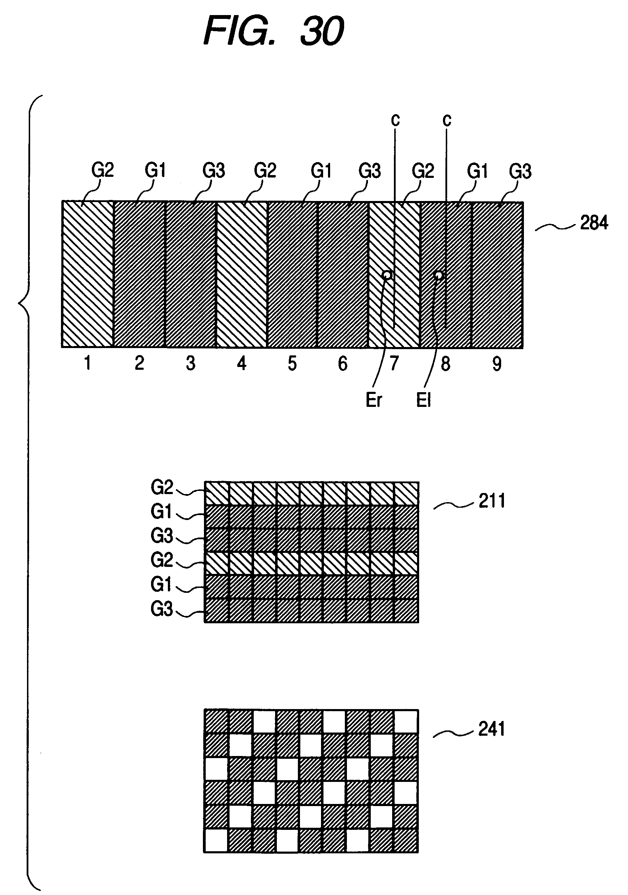

When the observer moves to the right and when the left and right eyes El, Er are located at the positions illustrated in Fig. 27 or Fig. 28, the synthetic parallax image illustrated is displayed in the display image 211 on the display. When the observer moves further to the right and when the left and right eyes are at the positions shown in Fig. 29 or Fig. 30, the synthetic parallax image is switched as illustrated.

As described above, the stereoscopic observation can be achieved without occurrence of the pseudo stereoscopy, by successively switching the contents of the synthetic parallax image synthesized from the parallax images of the limited three images according to the positions of the visual points.

Namely, the present embodiment enables the stable stereoscopic observation without prominence of switching timing by detecting on which side the eyes are located in each area of the radiated parallax image with respect to the center of the area and switching the synthetic parallax image with predicting to which direction the observer's head is moving, based on the information.

[Embodiment 2]

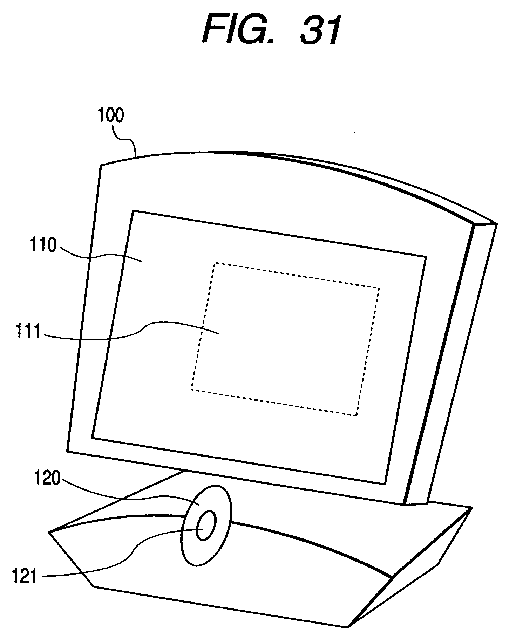

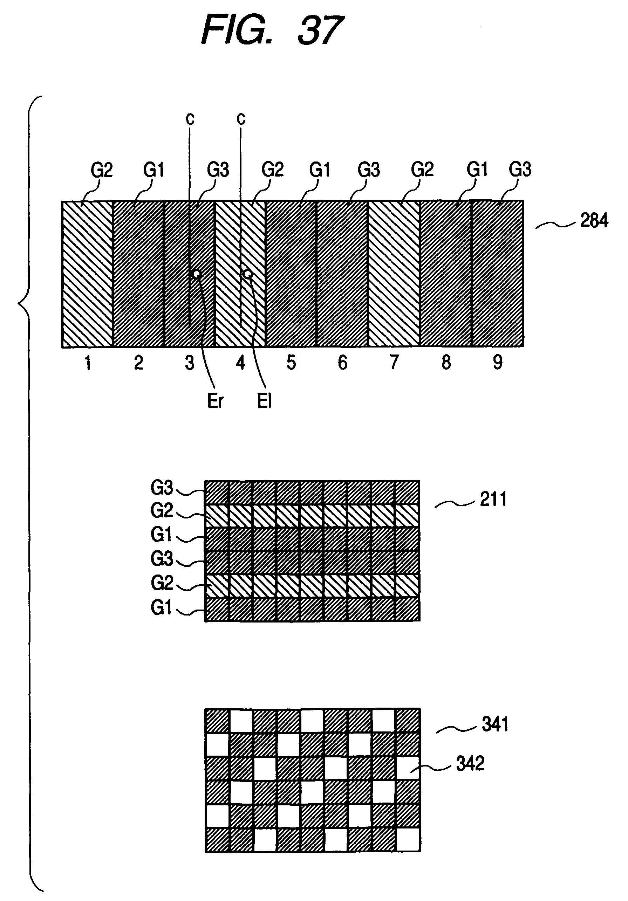

Embodiment 2 of the stereoscopic image display apparatus of the present invention will be described referring to Fig. 31 to Fig. 41. Members having the same functions as in Embodiment 1 will be denoted by the same reference symbols and differences will be described mainly.

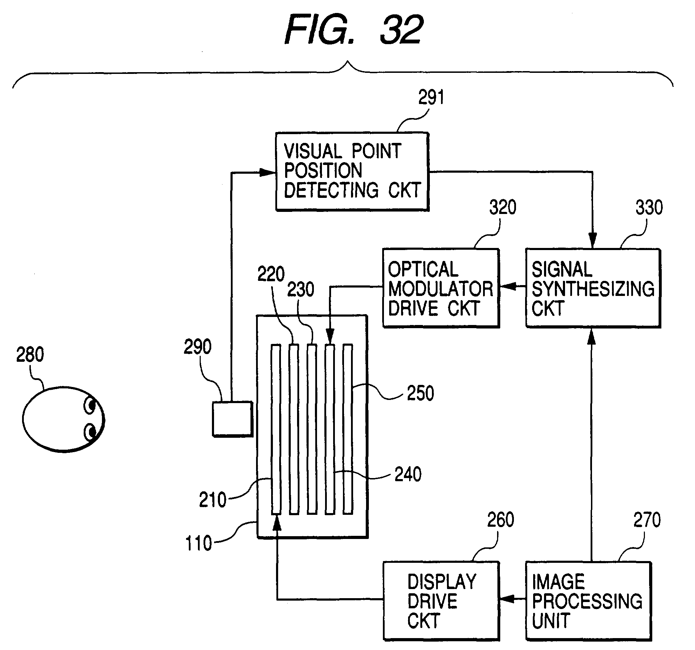

Fig. 31 is a diagram to show the external view of present Embodiment 2. In Fig. 31, reference numeral 111 designates a 3D window in which a stereoscopic image is displayed in the display section 110 of the display. Fig. 32 is a block diagram to explain the system of Embodiment 2. In Fig. 32 the display section 110 is similar to the display device 210 of Embodiment 1 but the display section of Embodiment 2 displays either of a stereoscopic image with parallax (parallax image) and an ordinary two-dimensional image without parallax. An area in which the parallax image is displayed corresponds to the 3D window 111 of Fig. 31.

Numeral 340 represents an optical barrier, which is an optical modulator of the liquid crystal or the like having the discrete pixel structure, used in place of the optical barrier 240 of Embodiment 1. The display drive circuit 260 performs the display of parallax image on the display 210, based on the signal from the image processing unit 270, as in Embodiment 1, and also outputs information about the size and position of the 3D window displayed on the display to a signal synthesizing circuit 330.

The information of the visual point position detecting circuit 291 is also outputted to the signal synthesizing circuit 330. The signal synthesizing circuit 330 synthesizes information for driving the optical modulator (optical modulator drive circuit) 340, based on the two information, and outputs the information to an optical modulator drive circuit 320.

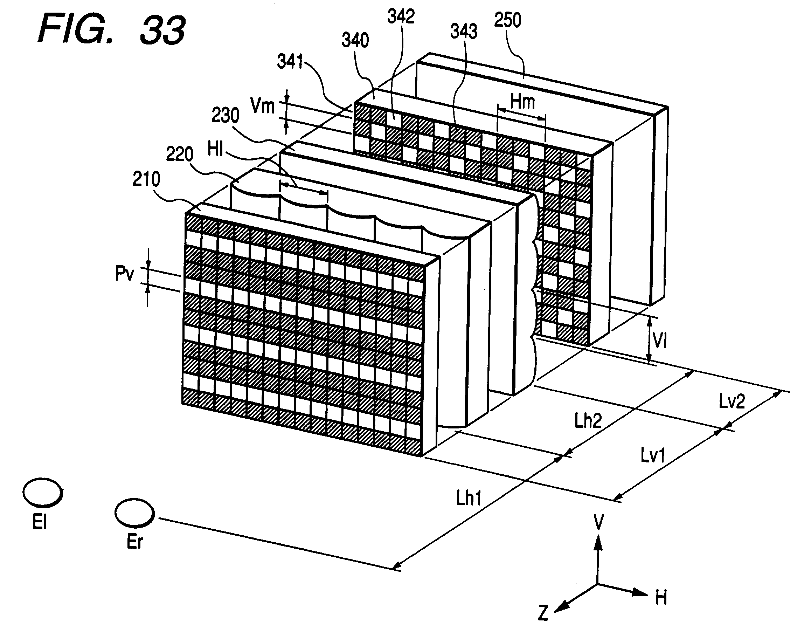

The optical barrier 340 is driven by the optical modulator drive circuit 320 to display a checkered mask pattern on the display surface thereof. Fig. 33 is a schematic diagram to show the main part of the display section 110 of the display.

Fig. 33 is different from Fig. 3 of Embodiment 1 only in that the optical barrier 240 is constructed of the optical modulator 340. The mask pattern 341 comprised of aperture portions 342 and shield portions 343 is formed in this optical modulator 340.

The contents of the mask pattern 341 associated with the 3D window 111 are similar to Fig. 4 in Embodiment 1. The parallax image displayed in the 3D window section of the display device 210 is also similar to that in Fig. 5 of the preceding embodiment, and the present embodiment is also similar to the preceding embodiment in the operation for displaying the stereoscopic image as illustrated in Fig. 6 to Fig. 11, in the explanatory diagrams of Fig. 12 to Fig. 16, and the structural conditions of the optical system. The present embodiment has two functional differences from Embodiment 1.

The first difference is that the present embodiment permits selective display of a stereoscopic image and a two-dimensional image by displaying the checkered pattern in the portion corresponding to the area of the 3D window 111, of the mask pattern 341 displayed in the optical modulator 340 and keeping the portion corresponding to the ordinary image display section in a transparent state.

The second difference is that if the number of parallax images that can be prepared is limited, for example, to three, the observation area of the stereoscopic image can be enlarged by changing the mask pattern 341 without changing the display of parallax image.

The first function is achieved by applying the technology suggested before by the inventors and described in Japanese Patent Application No. 8-260943.

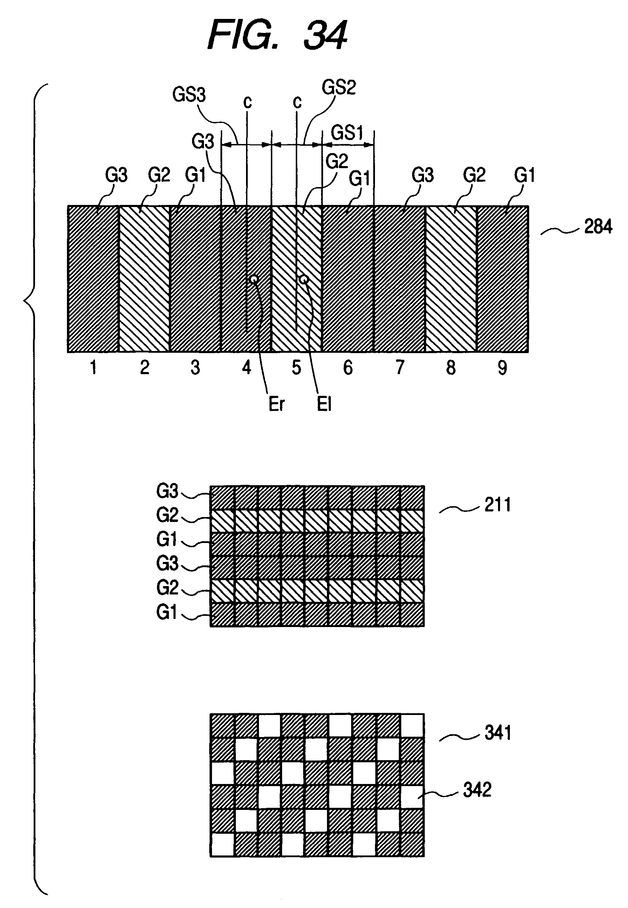

The following explains the function to enable the observer always to observe a normal stereoscopic image without occurrence of the state of pseudo stereoscopy by switching the mask pattern 341 according to the positions of the visual points even with change in the observation position of the observer, which is the second feature, referring to Fig. 34 to Fig. 41.

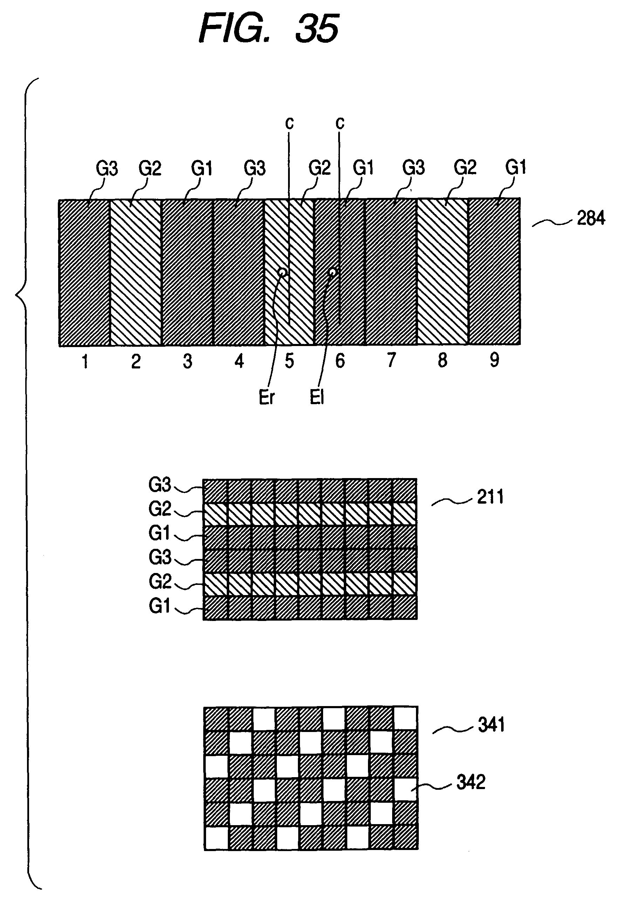

Fig. 34 and Fig. 35 show the same states as Fig. 17 and Fig. 18, and also indicate the mask pattern 341 in these states. The details of the operation are the same as in Embodiment 1.

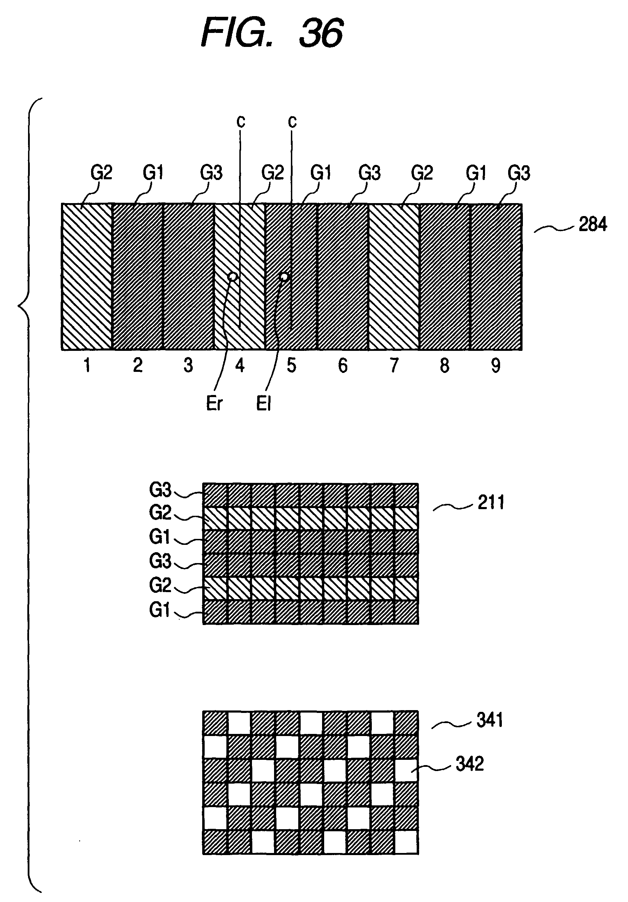

When the observer moves and, for example, when the left and right eyes El, Er go into the left side of the center lines c of the parallax images G2, G3 as illustrated from Fig. 36 to Fig. 37, the aperture portions 342 of the mask pattern 341 are moved by one aperture to the left as illustrated, without changing the synthetic parallax image 211 displayed on the display.

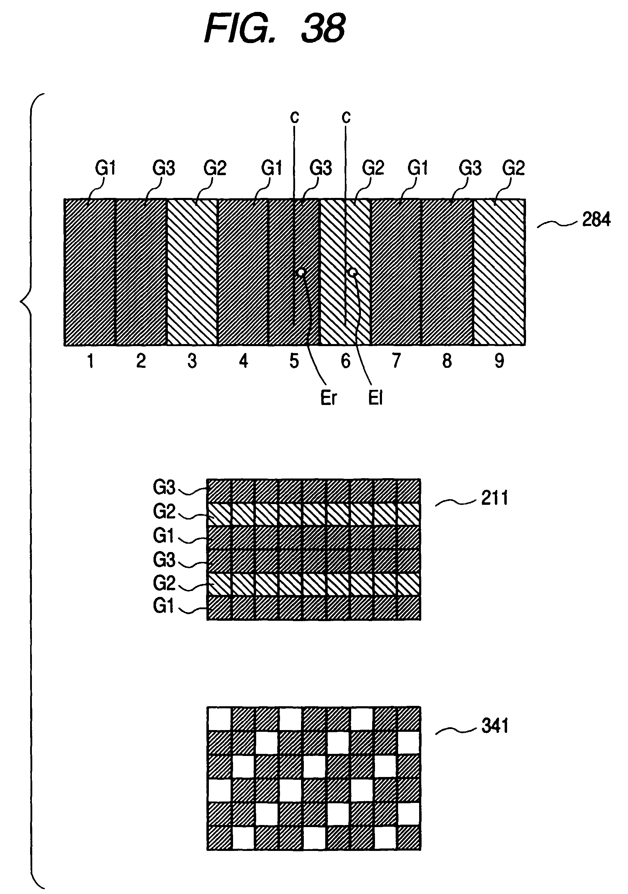

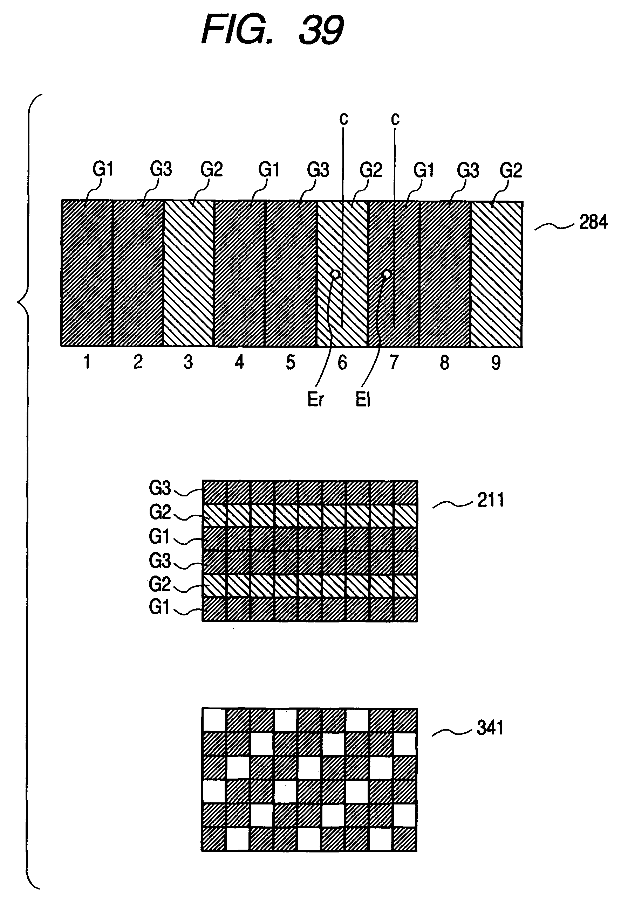

This causes the radiated parallax image 284 to move by one parallax image area to the left. In the states of Fig. 38 and Fig. 39 where the observer moves to the right, the mask pattern 341 is moved by one aperture to the right as illustrated, without changing the synthetic parallax image 211 displayed on the display, whereby the radiated parallax image 284 is moved by one parallax image area to the right.

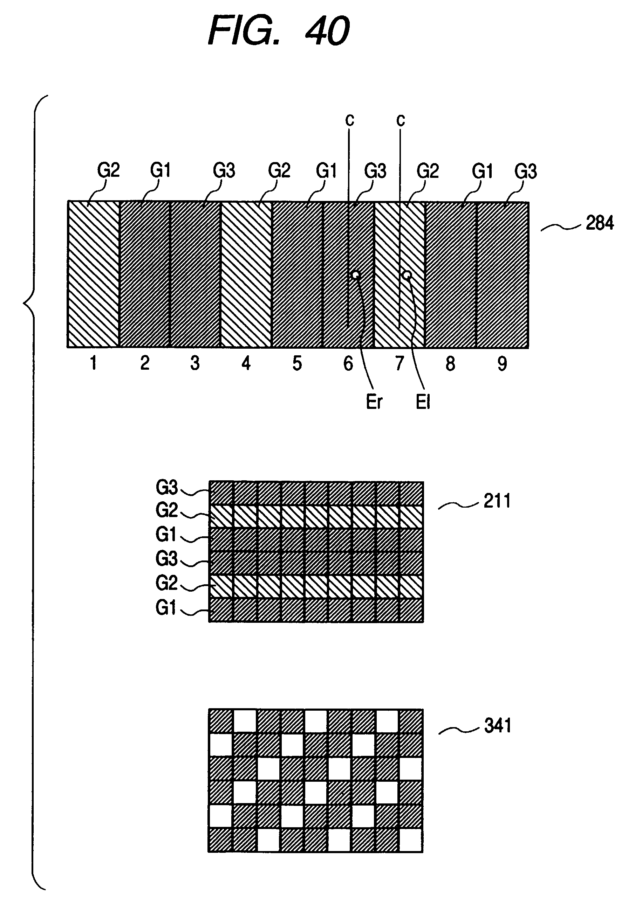

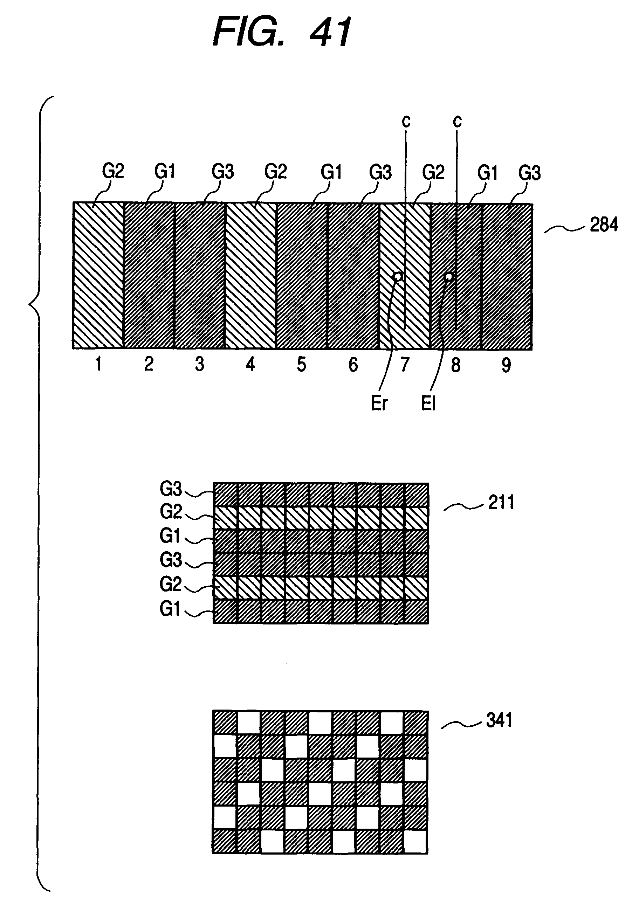

When the observer moves further to the right into the state of Fig. 40 or Fig. 41, the radiated parallax image 284 is moved further by one parallax image area to the right by switching the mask pattern 341 into the illustrated state. After that, the like control is carried out for left or right movement of the observer.

As described above, the present embodiment enables the stereoscopic observation without occurrence of the pseudo stereoscopy by using three parallax images and successively switching the mask pattern 341 according to the positions of the visual points.

The above described the example in which the parallax images were three images displayed simultaneously, and the operation is also similar where the number of parallax images is limited to four or more.

[Embodiment 3]

Embodiment 3 of the present invention will be described next. In preceding Embodiment 1 and Embodiment 2 the stereoscopic observation is always possible without occurrence of the state of pseudo stereoscopy even with movement of the observer, but the jumping state of image occurs because of the switching of the synthetic parallax image during the movement.

Present Embodiment 3 overcomes this drawback and provides a stereoscopic image display apparatus always permitting stable stereoscopy.

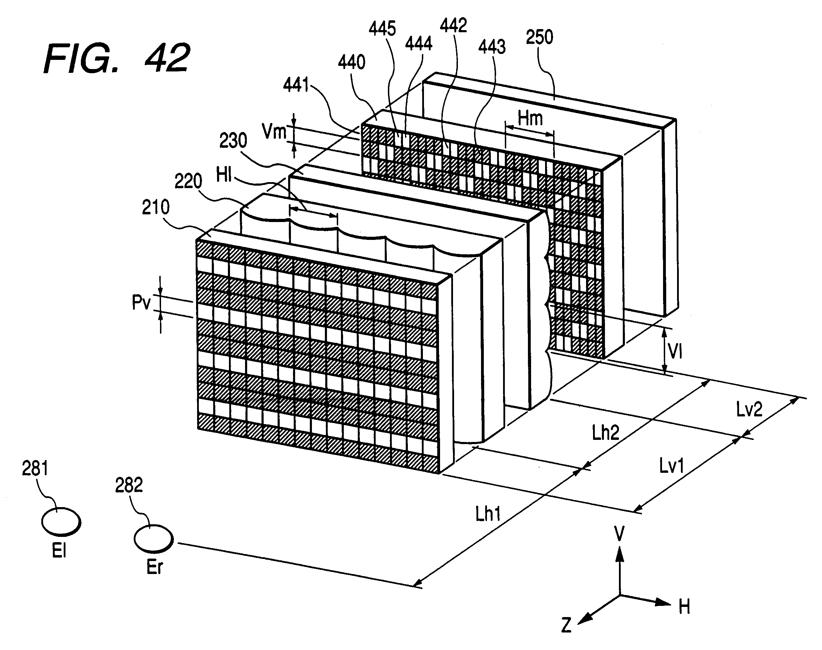

Embodiment 3 will be described with focus on differences from Embodiment 2, referring to Fig. 42 to Fig. 50.

Fig. 42 is a schematic diagram to show the main part of the display section 110 for display of stereoscopic image, which corresponds to Fig. 33 in Embodiment 2.

The present embodiment is different from Fig. 33 in that the optical modulator 340 is replaced by an optical modulator 440 and the contents of mask pattern 441 displayed therein are changed.

In the figure each aperture portion 442 of the mask pattern 444 displayed in the optical modulator 440 is comprised of plural pixels in Embodiment 3, different from the structure in which each aperture was comprised of one pixel in Embodiment 2. The figure shows an example in which each aperture is comprised of two pixels 444, 445 in the horizontal direction.

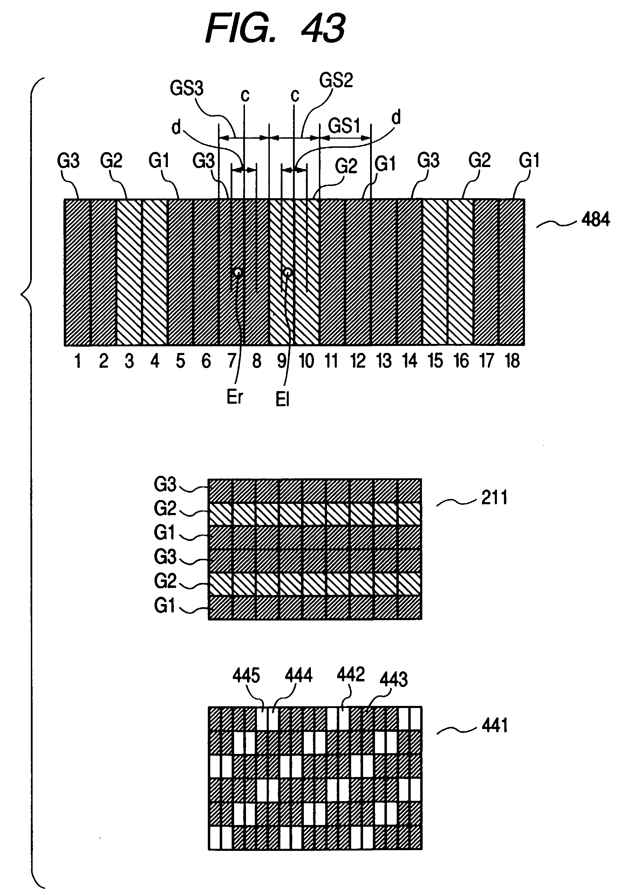

Therefore, the state corresponding to Fig. 34 of Embodiment 2 is as illustrated in Fig. 43. In Fig. 43 each radiated parallax image area of the radiated parallax image 484 is comprised of two partial areas corresponding to two pixels and Fig. 34 shows an example of partial areas 485, 486 corresponding to the pixels 444, 445 of the aperture portion of the mask pattern 441.

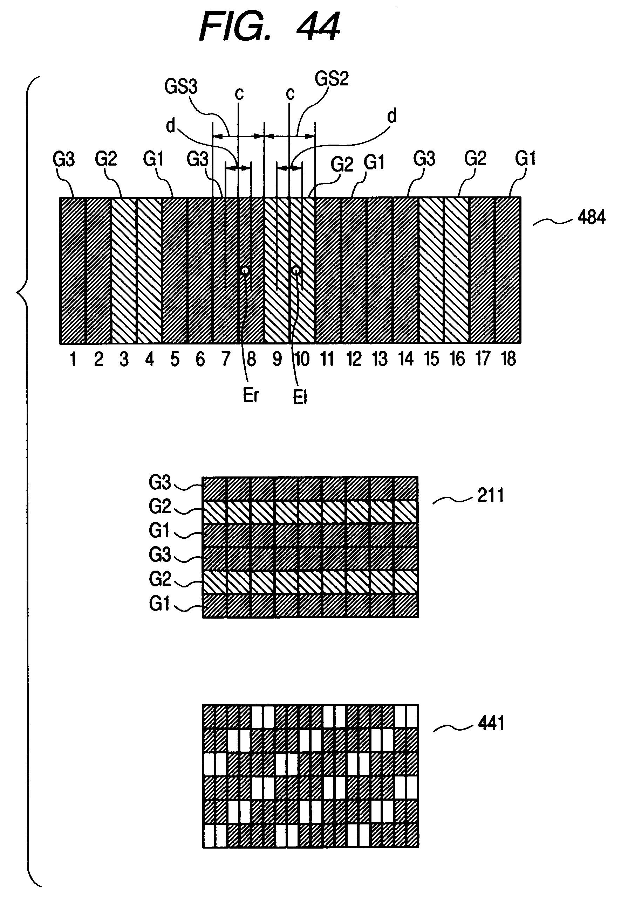

When the left and right eyes El, Er are located at the positions illustrated in Fig. 43 or Fig. 44, the synthetic parallax image 211 and the mask pattern 441 illustrated are displayed on the display device 210 and on the optical modulator 440, respectively.

In the drawing GS2 or GS3 indicates the width of the radiated parallax image areas of the vertical stripes in the radiated parallax image 484 and d is half of the width. In Fig. 43 or Fig. 44 the left and right eyes are present in this width d.

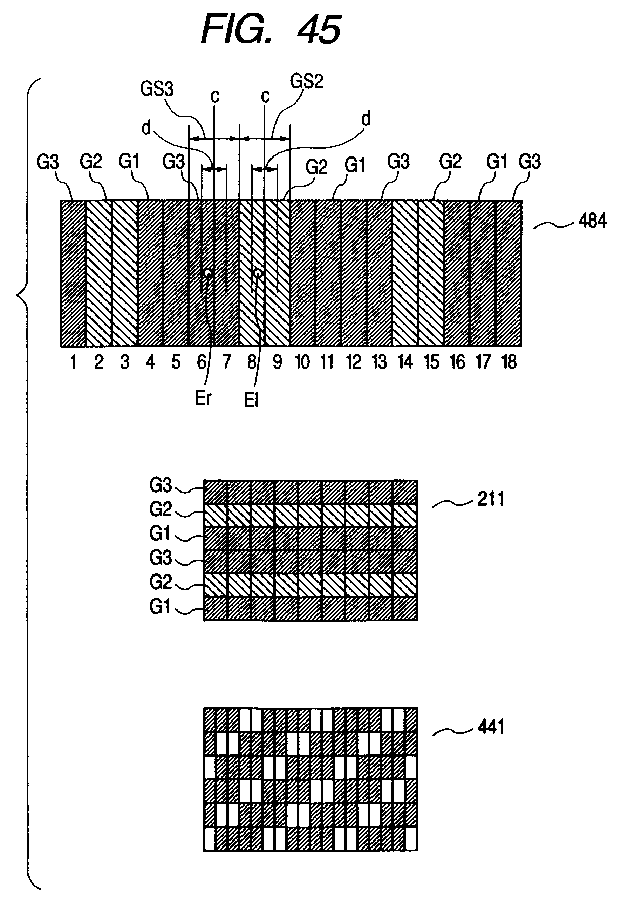

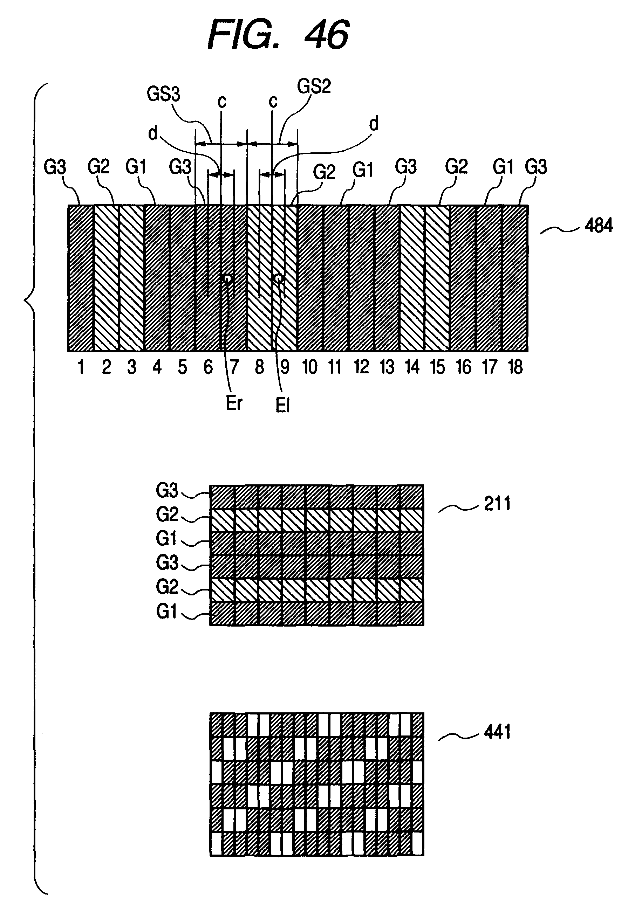

When the observer moves from this state to the left and when the left and right eyes El, Er are present in the range of Fig. 45 or Fig. 46, the aperture portions 442 of the mask pattern 441 are moved by one pixel to the left as illustrated without changing the synthetic parallax image 211, whereby the radiated parallax image 484 is moved by an area corresponding to one pixel to the left.

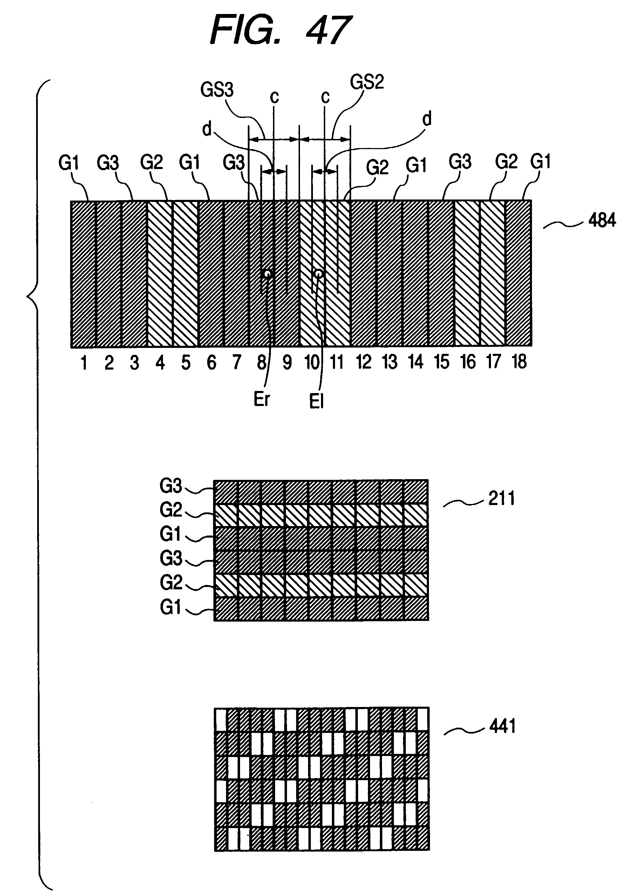

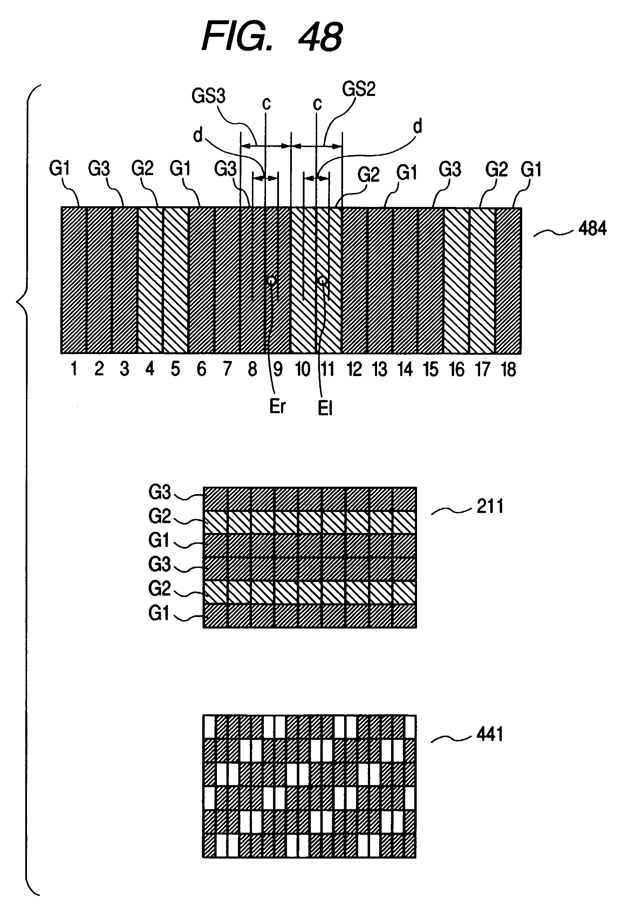

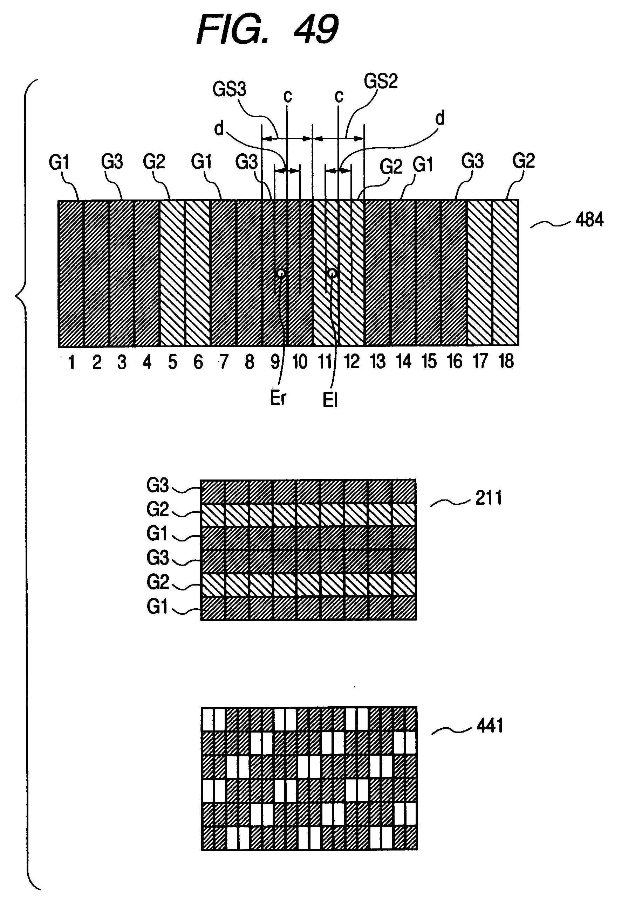

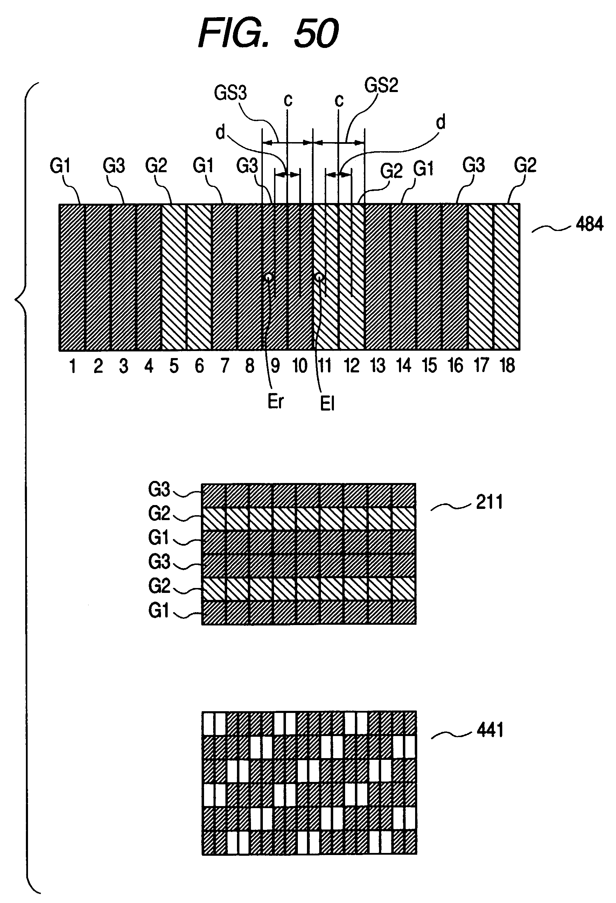

Conversely, when the observer moves to the right, the mask pattern 441 is controlled as illustrated in Fig. 47 or Fig. 48 without changing the synthetic parallax image 211. Fig. 49 and Fig. 50 show states where the observer moved further.

The present embodiment enables the stable stereoscopic image observation without occurrence of the pseudo stereoscopy and without change in the parallax image observed, by using the three parallax images and successively switching the mask pattern 441 according to the positions of the visual points in the above control.

The above exemplified the example in which each aperture portion of the mask pattern was comprised of two pixels, but it is also possible to provide a stereoscopic image display apparatus without switching of the parallax image during the movement and without occurrence of jumping of image similarly where each aperture is comprised of three or more pixels.

[Embodiment 4]

Embodiment 4 of the present invention will be described below.

Embodiment 3 necessitated three or more parallax images, whereas Embodiment 4 provides a stereoscopic image display apparatus that can always provide stable stereoscopy similarly without jumping of the parallax image by use of two parallax images.

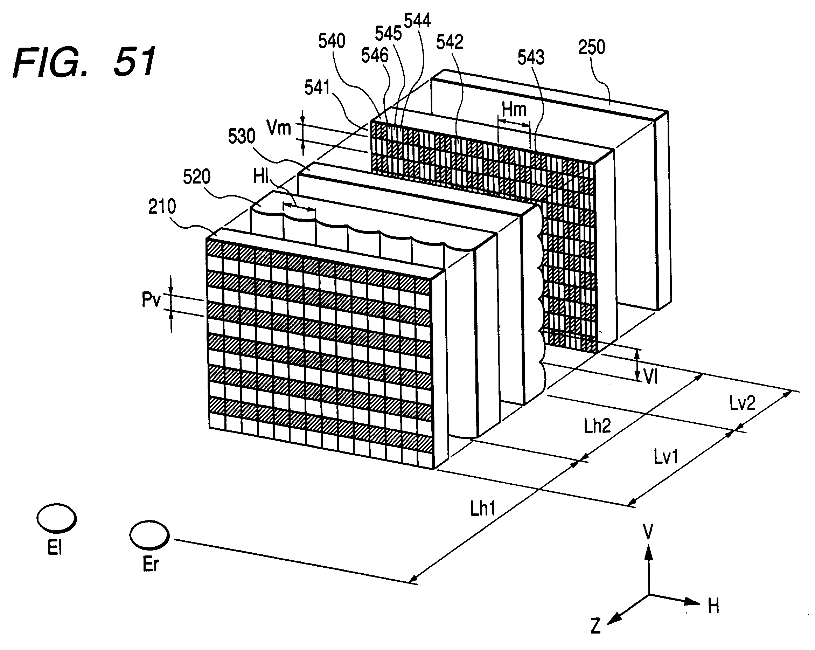

Embodiment 4 will be described referring to Fig. 51 to Fig. 64. Fig. 51 is a schematic diagram to show the main part of the display section 110 for display of stereoscopic image.

In Fig. 51, numeral 250 designates the back light source (light source means) and 540 the optical modulator having the discrete pixel structure, in the display surface of which the mask pattern 541 comprised of aperture portions 542 and shield portions 543 is formed. Each aperture portion 542 is composed of three pixels 544, 545, 546 and each shield portion 543 is also composed similarly of three pixels.

Numeral 530 represents the horizontal lenticular lens (horizontal cylindrical array) having the generating-line along the horizontal direction H, which is composed of a lot of plano-convex, horizontal cylindrical lenses arranged in the vertical direction V. Each cylindrical lens of the horizonal lenticular lens 530 has the lens curvature set so that images of the aperture portions and shield portions of the mask pattern 541 are formed on the image display surface of the display device 210.

The lens pitch (width) Vl of the horizontal lenticular lens 530 is set so as to be equal to double the vertical pitch Vm of the aperture portions 542 of the mask pattern 541.

Numeral 520 indicates the vertical lenticular lens (vertical cylindrical lens array) having the generating-line along the vertical direction V. which is composed of a lot of plano-convex, vertical cylindrical lenses arranged in the horizontal direction H. Each cylindrical lens forming the vertical lenticular lens 520 has the lens curvature set so that an image of the mask pattern 541 is formed at the observation position.

The horizontal pitch Hm of the aperture portions 542 and shield portions 543 of the mask pattern 541 is set to be equal to one pitch (width) Hl of the vertical cylindrical lenses of the vertical lenticular lens 520.

In Fig. 51, the glass covers, polarizing plates, electrodes, etc. of the display device 210 and the optical modulator 540 are omitted from the illustration and the display image on the display surface and the mask pattern shape are illustrated schematically.

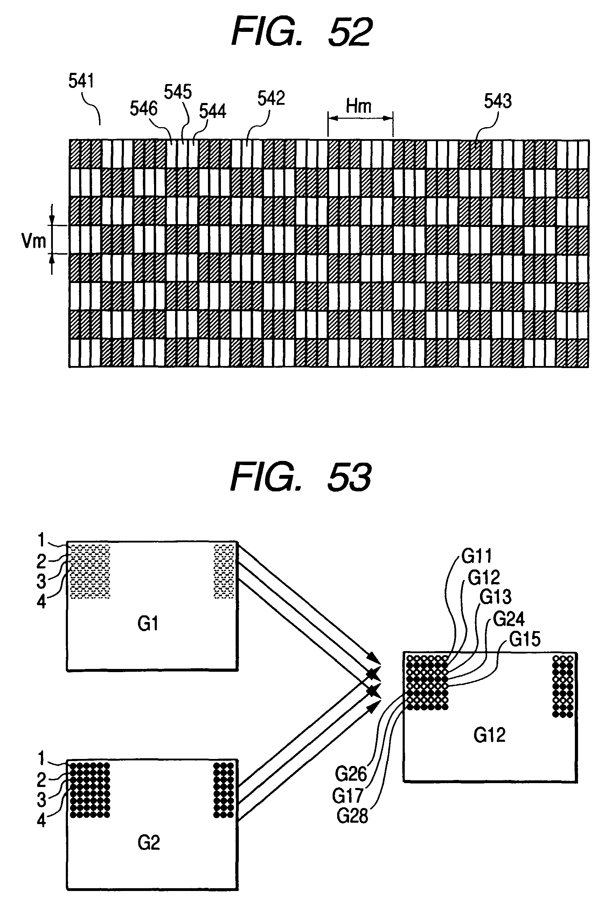

Described below referring to Fig. 52 is the mask pattern 541 comprised of the aperture portions and the shield portions, displayed in the optical modulator 540. Fig. 52 is a front view of the mask pattern 541 illustrated in Fig. 51.

As illustrated, the mask pattern 541 is composed of the aperture portions 542 and the shield portions 543 having the horizontal pitch Hm and the vertical width Vm. Each aperture portion 542 is composed of three pixels 544, 545, 546 and each shield portion 543 is also composed similarly of three pixels.

Next described referring to Fig. 53 is the parallax image displayed on the display device 210.

In Fig. 53 a synthetic parallax image G12 is formed by dividing each of two parallax images G1, G2 corresponding to the left and right eyes into a lot of stripe images of horizontal stripes as illustrated and rearranging the stripe images G1i, G2i formed from the parallax images G1, G2 every scanning line.

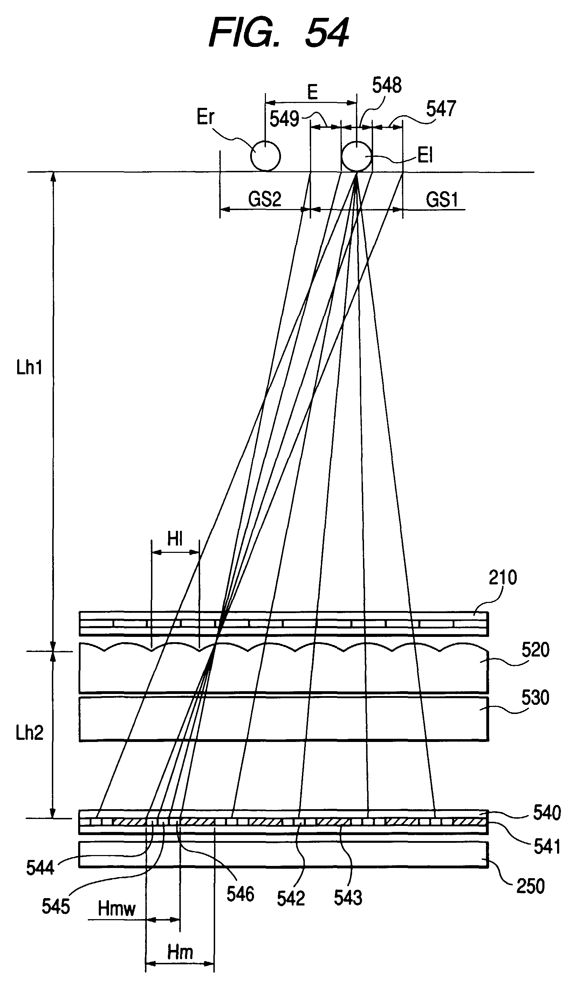

The operation to display the stereoscopic image will be described referring to Fig. 54 to Fig. 57. Fig. 54 is a horizontal sectional view of the display section 110 for display of stereoscopic image.

In Fig. 54, the light from the back light source 250 is emergent from the aperture portions 542 of the mask pattern 541 of the optical modulator 540 and passes through the horizontal cylindrical lens 530 (though the horizontal lenticular lens has no specific action in this cross section).

Through each cylindrical lens forming the vertical lenticular lens 520, the transmitted beams from the aperture portions 542 of the mask pattern 541 are radiated into a radiated parallax image area GS1 at the position of the observer.

The beams radiated into this area GS1 are modulated by the synthetic parallax image displayed on the display device 210 provided between the vertical lenticular lens 520 and the observer.

In this cross section the beams pass through the stripe images of lines G11, G13, G15,... synthesized from the parallax image G1 illustrated in Fig. 53 and the parallax image G1 is observed in this area.

Since each aperture portion 542 of the mask pattern 541 is composed of three pixels 544, 545, 546 herein, a beam passing through each pixel irradiates an area 547, 548, or 549.

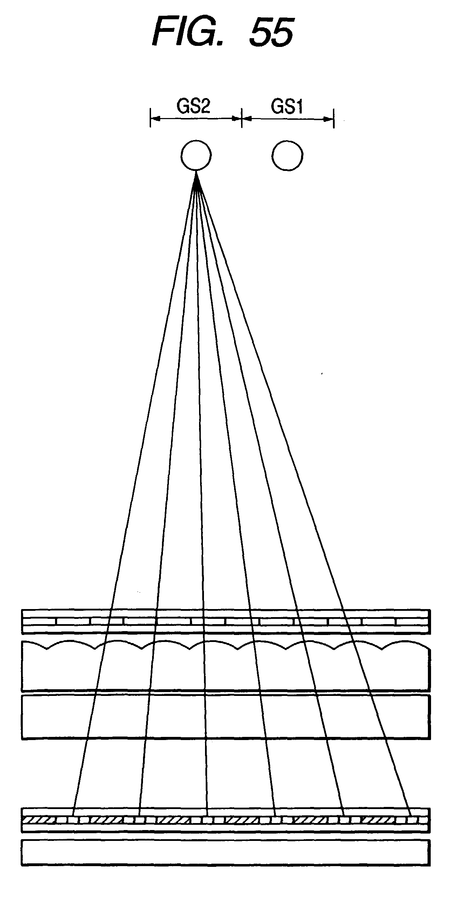

Likewise, beams in the cross section corresponding to a scanning line immediately below the scanning line of Fig. 54 are radiated into an area GS2, as illustrated in Fig. 55. The beams radiated into this area GS2 are modulated by the synthetic parallax image displayed on the display device 210 provided between the vertical lenticular lens 520 and the observer. In this cross section, the beams pass through the stripe images of lines G22, G24, G26,... synthesized from the parallax image G2 illustrated in Fig. 53 and the parallax image G2 is observed in this area.

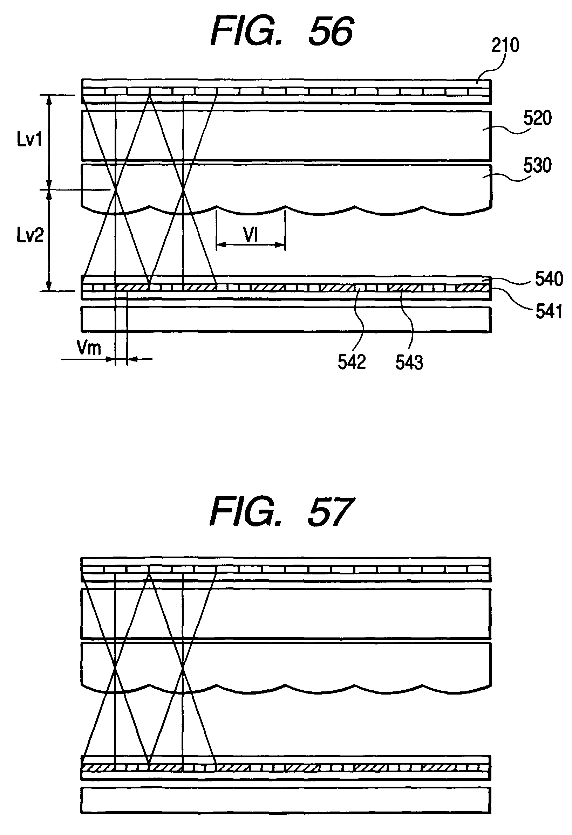

Fig. 56 is a vertical sectional view of the display section 110 for display of stereoscopic image. In this cross section the aperture portions 542 of the mask pattern 541 irradiated by the back light source 250 are arranged so that images of the aperture portions 542 of the optical modulator 540 are formed at such a magnification as to be equal to the pixel width of the display device 210 on the image display surface of the display device 210 by the action of the horizontal lenticular lens 530. Therefore, only the element stripe images of the parallax image G1 are radiated by properly adjusting the positions of the optical modulator 540, the display device 210, and the horizontal lenticular lens 530.

Likewise, only the element stripe images of the parallax image G2 are radiated in the pixel column one pixel next to the pixel column of Fig. 56, as illustrated in Fig. 57.

When the parallax images G1, G2 are set to be the parallax images corresponding to the eyes El, Er and when the both eyes are placed in these areas, the observer observes the parallax images G1, G2 separately and independently by the left and right eyes, respectively, and thus can observe a stereoscopic image.

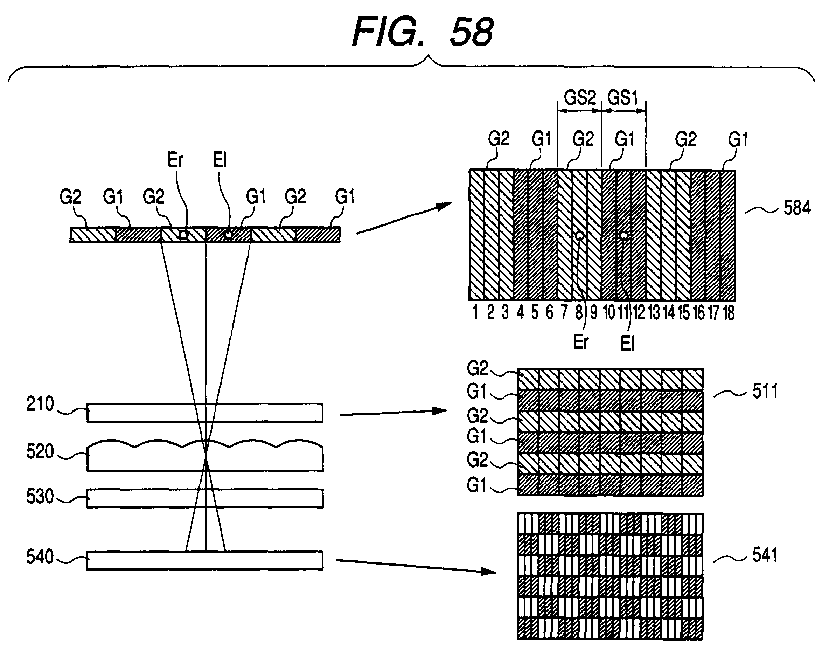

Fig. 58 to Fig. 60 are explanatory diagrams to schematically show the above operation. In Fig. 58, the left figure is the main part of a horizontal sectional view of the display section 110 of the display and the right figure includes the mask pattern 541 of the optical modulator 540, the synthetic parallax image 511 of the display device 210, and the radiated parallax image 584 formed at the position of the observer. The radiated parallax image 584 is comprised of parallax images of the parallax images G1, G2 and Fig. 58 shows a state in which the left and right eyes El, Er of the observer are located at the positions of the parallax images G1, G2.

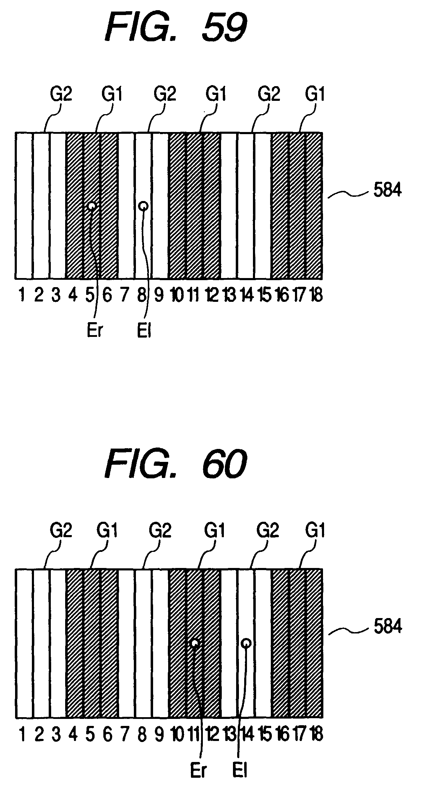

When the observer moves from this state to the left into the state of Fig. 59 or when the observer moves to the right into the state of Fig. 60, that is, when the left and right eyes observe the respective parallax images of G2, G1, this state is of the pseudo stereoscopy and the normal stereoscopic observation is impossible.

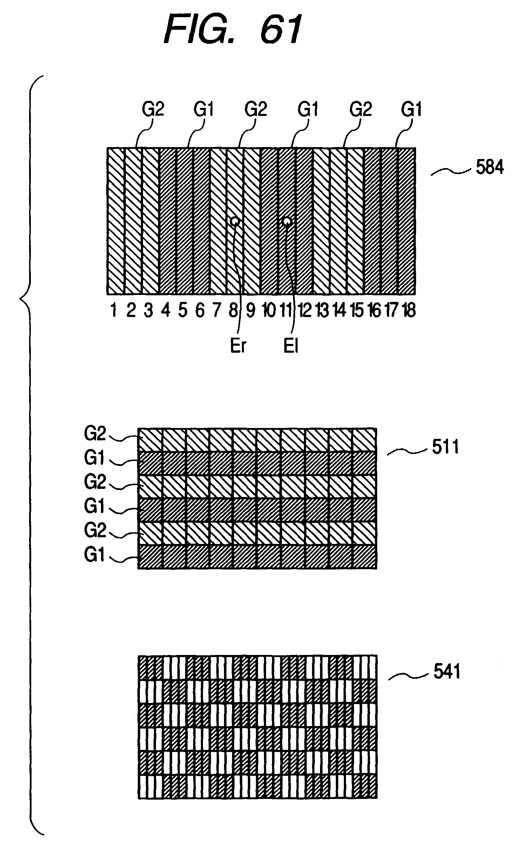

Now, let us explain the function to permit the observer always to observe a normal stereoscopic image without occurrence of the state of pseudo stereoscopy even with change in the observation position of the observer, referring to Fig. 61 to Fig. 64.

Fig. 61 shows the same state as Fig. 58, in which the left and right eyes El, Er observe the respective parallax images G1, G2, thus indicating the state of normal stereoscopy.

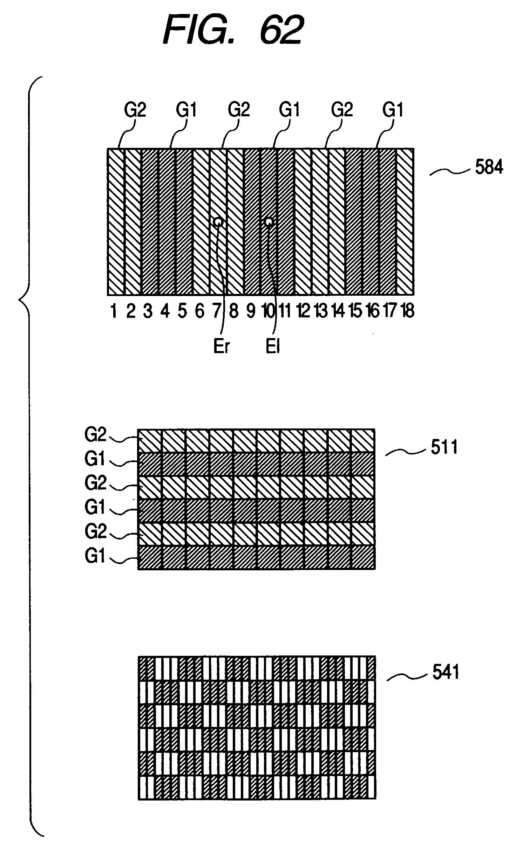

When the observer moves from this state in which the left and right eyes are located in the respective areas 11, 8 in the figure, for example, when the left and right eyes go into left adjacent areas (areas 10, 7 in the figure) out of the three partial areas of the parallax images G1, G2 as illustrated in Fig. 62, the aperture portions 542 of the mask pattern 541 are moved by one pixel to the left as illustrated without changing the synthetic parallax image 511 of the display 210. This causes the radiated parallax image 582 to move by an area corresponding to one pixel to the left.

This control permits the observer to observe the images at the centers of the respective image display areas G1, G2, though the observer moved to the left adjacent areas in the three partial areas of the parallax images G1, G2.

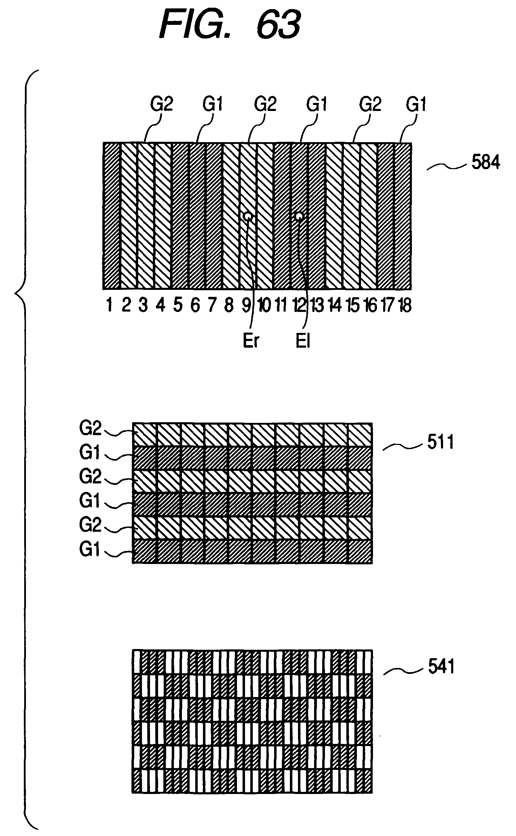

In the state of Fig. 63 in which the left and right eyes are located in the areas 12, 9 in the figure after the observer moved to the right, the aperture portions of the mask pattern 541 are moved by one pixel to the right as illustrated without changing the synthetic parallax image 511 of the display 210 as illustrated, whereby the radiated parallax image 584 is moved by an area corresponding to one pixel to the right.

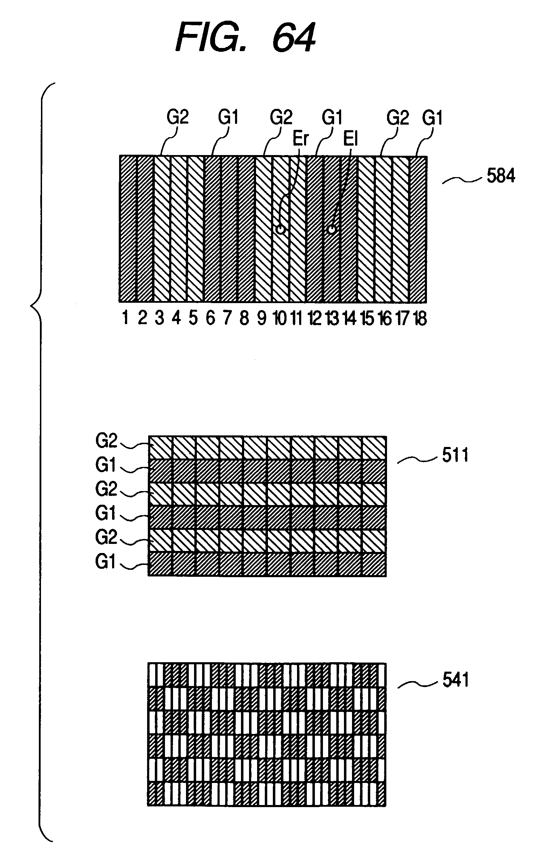

When the observer further moves from this state to the right into the state of Fig. 64, the mask pattern 541 is switched into the illustrated state without changing the synthetic parallax image 511, whereby the radiated parallax image 584 is moved further by an area corresponding to a pixel to the right. Likewise, the like control is carried out for movement of the observer to the left or to the right.

As described above, the present embodiment permits the stable stereoscopic observation without occurrence of the pseudo stereoscopy by using the two parallax images, successively switching the mask pattern 541 according to the positions of the visual points, and thereby controlling the radiated parallax image areas associated therewith to the positions of the left and right eyes.

[Embodiment 5]

Embodiment 5 of the present invention will be described next. In Embodiment 1 and Embodiment 2 the stereoscopic observation can always be permitted without occurrence of the state of pseudo stereoscopy even with movement of the observer, but the apparatus experiences the jumping state of image because of the switching of the synthetic parallax image during the movement.

Embodiment 3 showed the stereoscopic image display apparatus capable of always providing the stable stereoscopy to overcome this disadvantage by switching the pattern display of the mask pattern, whereas present Embodiment 5 is a stereoscopic image display apparatus that can assure the stereoscopic state with less jumping by changing the contents of the synthetic parallax image displayed.

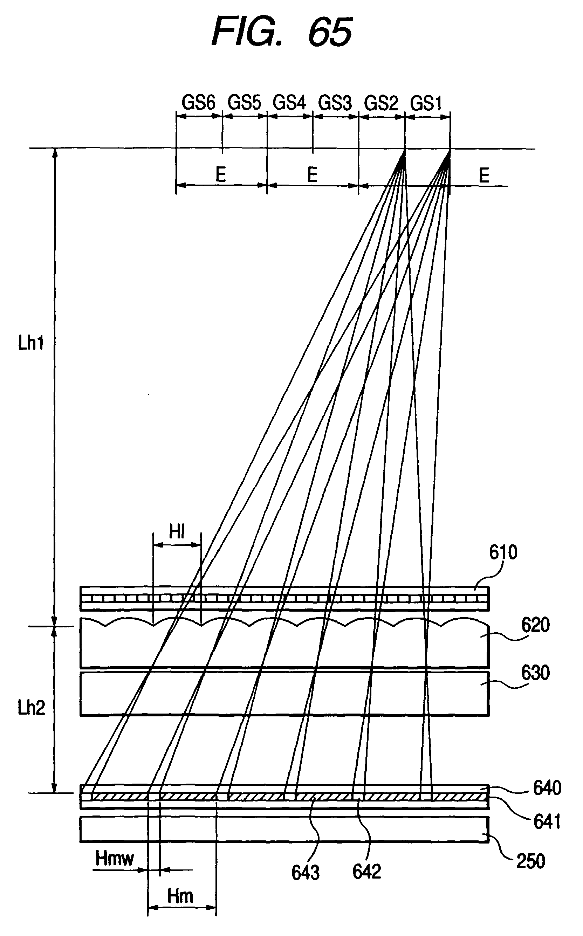

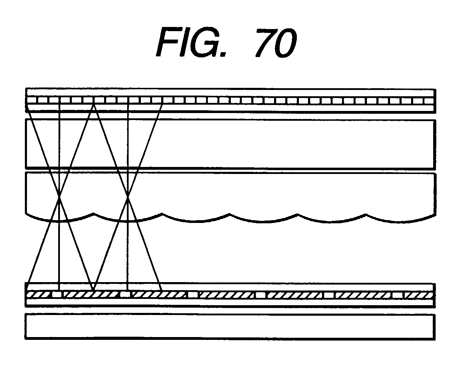

The external view, the system configuration, the way of forming the synthetic parallax image, etc. are the same as in Embodiment 1. The present embodiment will be described referring to Fig. 65 to Fig. 70 with focus on differences from Embodiment 1.

Fig. 65 is a horizontal sectional view of the display section 110 for display of stereoscopic image, which corresponds to Fig. 6 of Embodiment 1.

The present embodiment is different from Embodiment 1 in that Embodiment 1 was arranged so that the lens pitch of the vertical lenticular lens 220 and the lens pitch of the horizontal lenticular lens 230 were set to be equal to three times the horizontal width Hmw and the vertical width Vm, respectively, of the aperture portions 242 of the mask pattern 241 of the optical barrier 240 whereas the present embodiment is arranged so that they are set to be equal to six times the horizontal width and the vertical width, respectively, and in that the parallax images displayed simultaneously on the display device 210 are six images. In addition, the structural conditions of the optical system are changed as described hereinafter.

The action of each element is the same as in Embodiment 1, and in Fig. 65 the beams from the aperture portions 642 irradiate the radiated parallax area image GS1 at the observation position. In this connection, in Embodiment 1 the radiated area GS1 was equal to the eye distance E, whereas in the present embodiment it is set smaller than the eye distance E, from the new optical structural conditions.

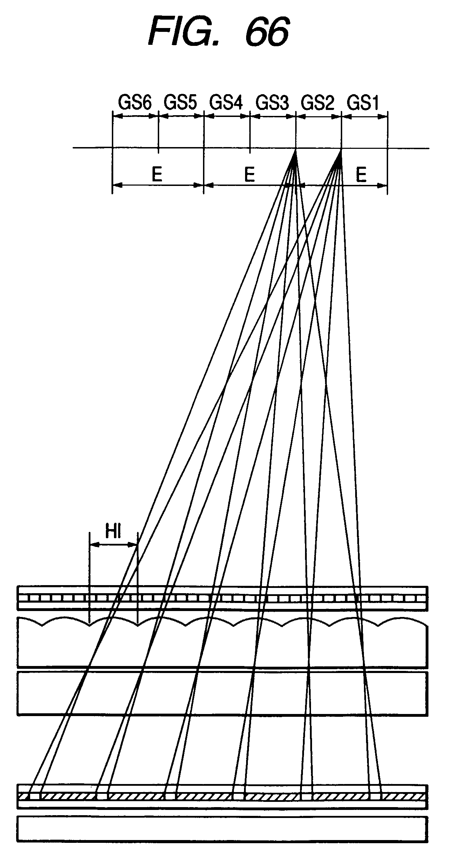

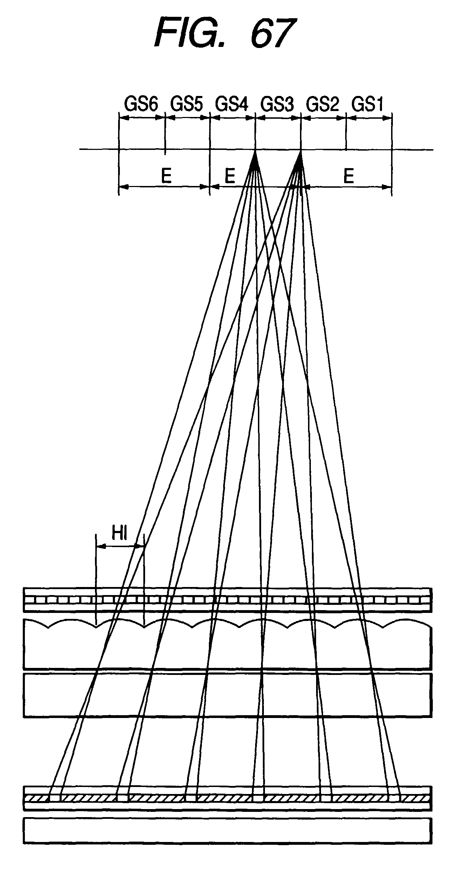

Fig. 65 shows an example of setting at $(1/2)E$. Fig. 66 is a horizontal sectional view corresponding to a scanning line immediately below the scanning line of Fig. 65 to show a state in which the radiated parallax image area GS2 is irradiated, and Fig. 67 is a horizontal cross section one more scanning line below.

Likewise, the radiated parallax image areas GS1 to GS6 replace the radiated parallax image areas GS1 to GS3 in Embodiment 1.

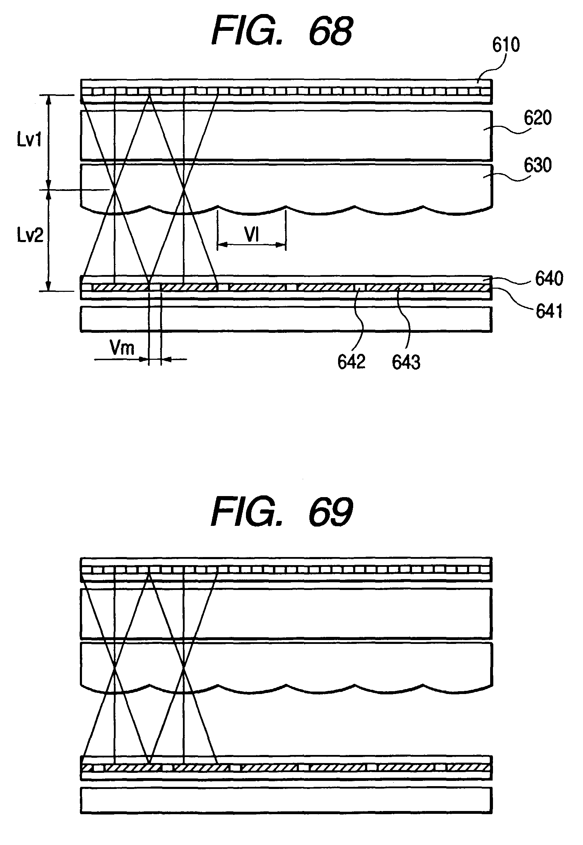

Fig. 68 to Fig. 70 are vertical cross sections. The structural conditions of the optical system in the horizontal cross section will be described below referring to Fig. 65. Using the same parameters as in Embodiment 1, the present embodiment is arranged to satisfy the following conditions.

$$GS/(Hm/2) = Lh1/Lh2 \qquad (Eq. 4)$$

$$Lh1/(Lh1 + Lh2) = Hl/Hm \qquad (Eq. 5)$$

$$GS < E \qquad (Eq. 6)$$

Here, GS represents the width of the radiated parallax image areas at the observation position and Fig. 65 to Fig. 70 show the case of:

$$GS = E/2.$$

The parallax images used in Embodiment 1 were those where the subject was viewed at intervals of the spacing corresponding to the eye distance E, whereas the present embodiment employs the parallax images where the subject is viewed at intervals of the spacing corresponding to the distance GS.

The above structure permits the observation of a stereoscopic image with less jumping than in Embodiment 1 even with switching of the parallax images displayed according to movement of the observer.

[Embodiment 6]

The embodiments described heretofore, Embodiment 1 to Embodiment 5, allow the enlargement of the stereoscopic area or the wraparound observation of a display object, but in either case either eye of the observer observes only part of all the horizontal scanning lines of the display at a certain time. Therefore, the resolution is lowered in the vertical direction. Present Embodiment 6 provides a stereoscopic image display apparatus permitting the enlargement of stereoscopic area or the wraparound observation of display object and having a good horizontal resolution. A specific form will be described as an application to Embodiment 2 with focus only on differences from Embodiment 2, but the present embodiment can also be applied similarly to Embodiments 1, and 3 to 5.

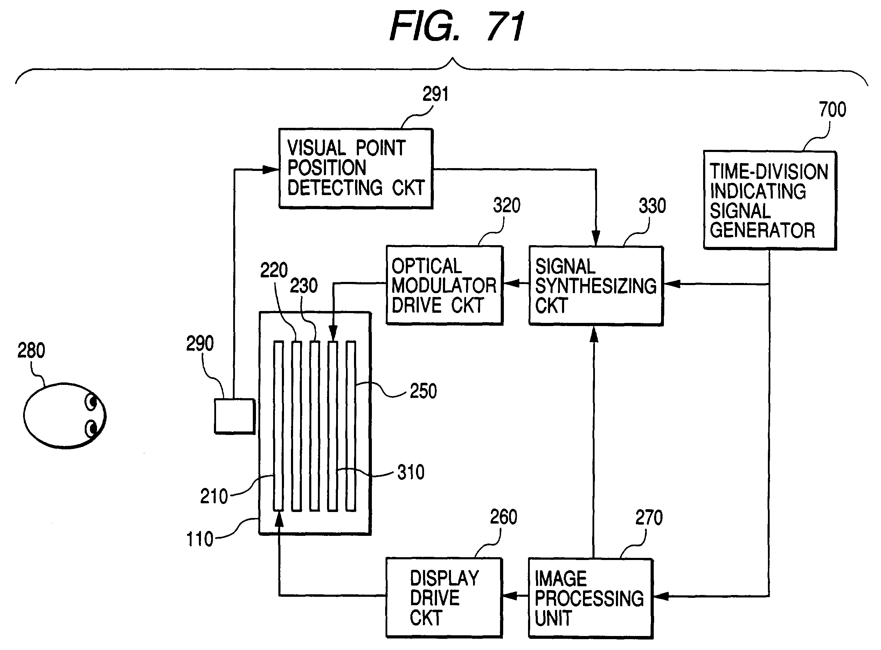

Fig. 71 is a block diagram of the system of present Embodiment 6, which corresponds to Fig. 32 of Embodiment 2, and the present embodiment is different from Embodiment 2 in that a time-division display signal generating-line 700 is added. The time-division display signal generating-line 700 outputs a synchronous signal of fixed frequency f and this signal is supplied to the image processing unit 270 and to the signal synthesizing circuit 330 to rewrite the synthetic parallax image displayed on the display device 210 and the contents of the mask pattern of the optical modulator 310 in synchronism.

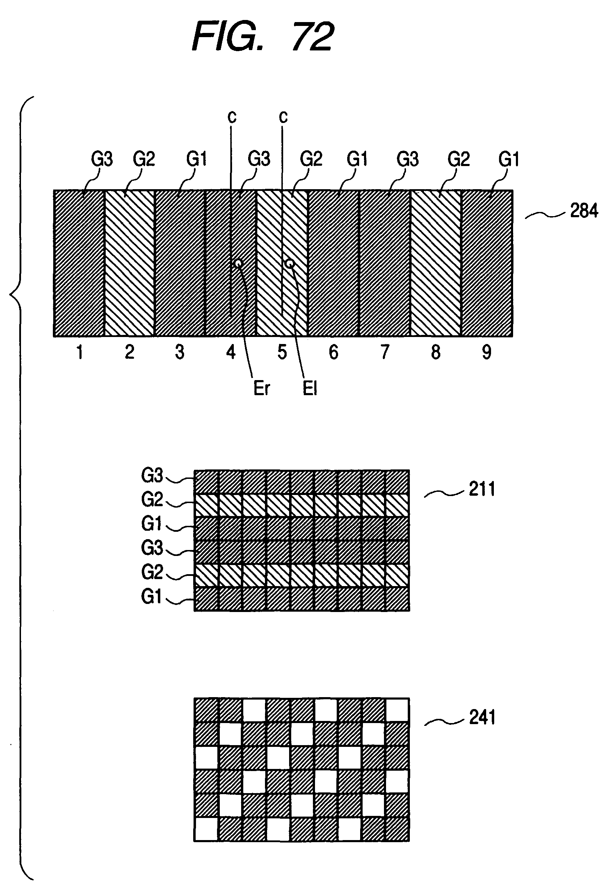

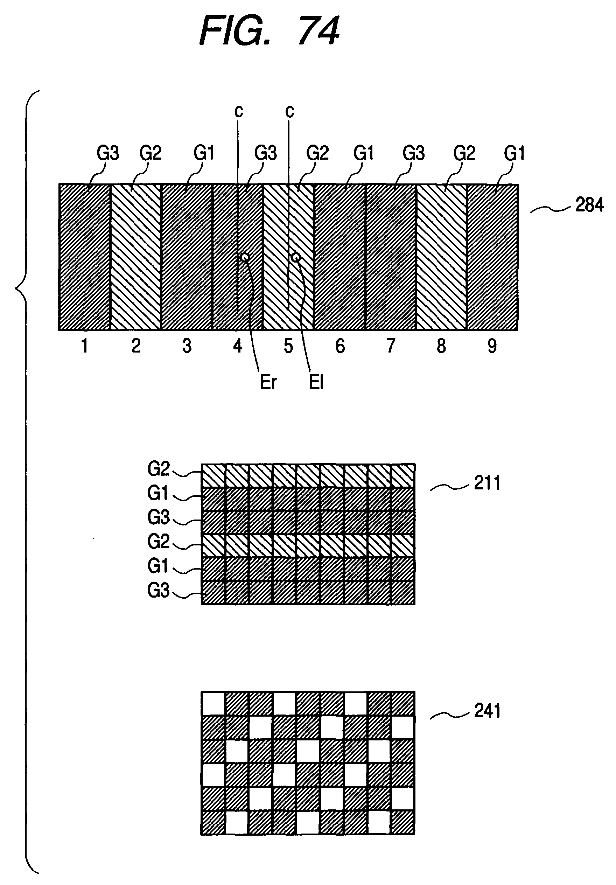

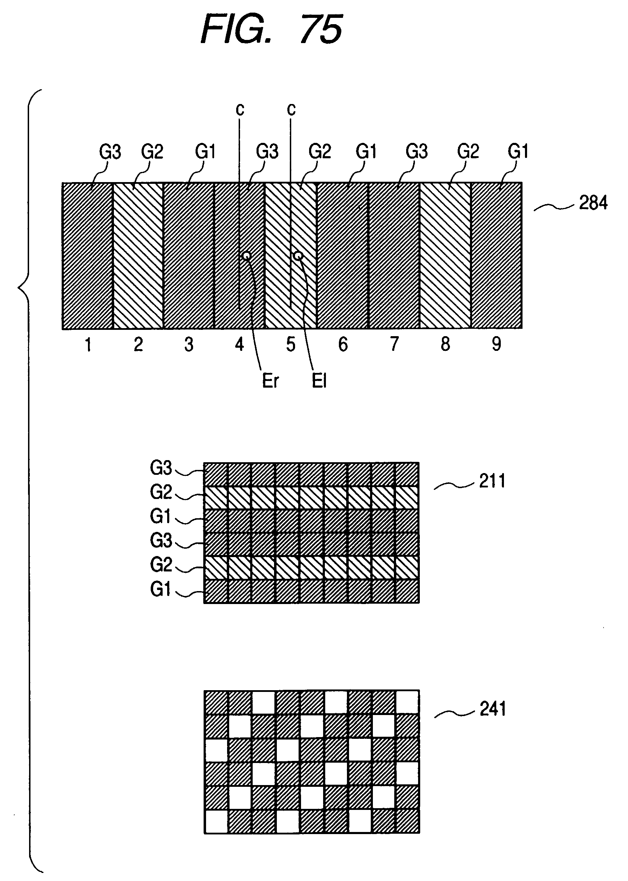

The frequency f is set to $f = m*F$ where m is the number of parallax images and F is the frequency at which the observer recognizes no flicker of the display. Fig. 72 to Fig. 75 are explanatory diagrams for explaining how to display the synthetic parallax image and the mask pattern, using the signal of the frequency f.

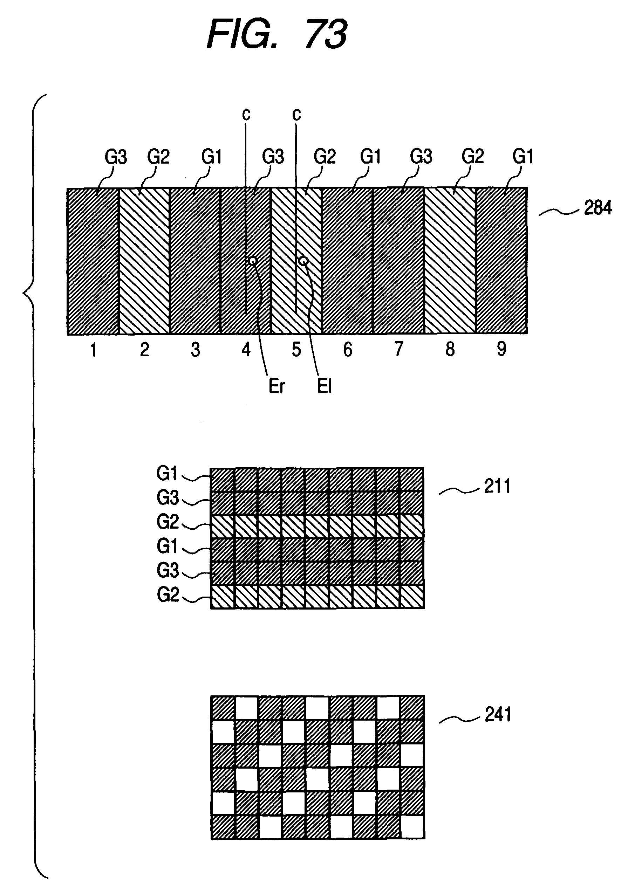

Fig. 72 shows a state corresponding to Fig. 34 of Embodiment 2. From this state, the synthetic parallax image of the display 210 and the mask pattern of the optical modulator 310 are controlled so as to be switched simultaneously every fixed period of the synchronous signal as illustrated in Figs. 73, 74, and 75 and so that the radiated parallax images at the observation position become the same parallax images at the same positions.

This causes each eye of the observer to observe the parallax images displayed in all the horizontal scanning lines of the display 210 within a lag time, so that the observer can observe an image with a high horizontal resolution.

As detailed above, the present invention can accomplish the stereoscopic image display apparatus having the effects including the following:

(a-1) the observation of normal stereoscopic image is always permitted even with movement of the observer, by switching the synthetic parallax image displayed on the display and synthesized from a plurality of parallax images according to the positions of the visual points of the observer, and the wraparound observation of display object is permitted by properly selecting the synthetic parallax image displayed and switched;

(a-2) the observation of normal stereoscopic image is always permitted even with use of the limited number of parallax images and with movement of the observer, by constructing the optical barrier of the optical modulator and switching the mask pattern displayed on the display surface thereof according to the positions of the visual points of the observer;

(a-3) the observation of stable stereoscopic image is always permitted without jumping of image even with movement of the observer, by constructing the optical barrier of the optical modulator, composing each aperture portion of the mask pattern displayed on the display surface thereof of a plurality of pixels, and controlling the positions of the aperture portions according to the positions of the visual points of the observer;

(a-4) the observation of stereoscopic image is permitted with less degradation of the resolution in the vertical direction, by constructing the optical barrier of the optical modulator and switching the contents of the mask pattern displayed on the display surface thereof and the synthetic parallax image displayed on the display in synchronism within the lag time; and so on.

A stereoscopic image display apparatus has a display section 110 and a visual point position detecting mechanism for detecting positional information of an observer. The display apparatus uses an optical barrier having a mask pattern formed therein, and makes a patterned beam pass through an optical system to illuminate a display having a discrete pixel structure and displaying a synthetic parallax image by use of scanning lines. The observer stereoscopically observes the image information displayed on the display. The synthetic parallax image is comprised of m parallax images where m is an integer not less than 3. The contents of the synthetic parallax image are changed according to visual point position information outputted from the visual point position detecting mechanism according to positions of visual points of the observer.

**Claims**

1. A stereoscopic image display apparatus comprising a visual point position detecting mechanism, said display apparatus being arranged to use an optical barrier in which a plurality of aperture portions and shield portions are arranged horizontally and vertically at a predetermined pitch to form a mask pattern, irradiate said barrier with a beam from light source means to obtain a patterned beam, make the patterned beam pass through an optical system to illuminate a display having a discrete pixel structure and displaying a synthetic parallax image by use of scanning lines, guide beams based on the parallax image displayed on the display, to the right eye and to the left eye of an observer, and permit stereoscopic observation of image information displayed on the display, wherein a predetermined synthetic parallax image comprised of plural parallax images preliminarily prepared as a set of m images where m is an integer not less than 3 is selected and displayed according to visual point position information outputted from the visual point position detecting mechanism.

2. The stereoscopic image display apparatus according to claim 1, wherein a plurality of synthetic parallax images are provided and said predetermined synthetic parallax image is selected from the plurality plurality of synthetic parallax images.

3. The stereoscopic image display apparatus according to Claim 1, wherein said optical system comprises a vertical cylindrical lens array having a plurality of vertical cylindrical lenses having a generating-line along the vertical direction and arrayed in the horizontal direction, and a horizontal cylindrical lens array having a plurality of horizontal cylindrical lenses having a generating-line along the horizontal direction and arrayed in the vertical direction.

4. The stereoscopic image display apparatus according to Claim 3, wherein a lens pitch of said horizontal cylindrical lens array is $m \times n$ times a vertical width of the mask pattern of said optical barrier where n is an integer.

5. The stereoscopic image display apparatus according to Claim 1, wherein a horizontal width of stripe-shape irradiation areas of the m parallax images projected to an observation position of the observer is set to be equal to or smaller than a distance between the eyes of the observer.

6. The stereoscopic image display apparatus according to Claim 1, wherein the plural parallax images forming the synthetic parallax image are images observed from visual point positions spaced corresponding to a distance set to be equal to or smaller than a distance between the eyes.

7. The stereoscopic image display apparatus according to Claim 1, wherein the m parallax images displayed simultaneously, and the other parallax images preliminarily prepared are displayed as being switched according to an output from the visual point position detecting mechanism for detecting positions of visual points of the observer, whereby the parallax images guided to the both eyes of the observer always provide normal stereoscopy for the observer, irrespective of movement of the positions of the visual points.

8. The stereoscopic image display apparatus according to Claim 1, wherein said visual point position detecting mechanism is arranged to detect on which side the visual points of the observer are located with respect to centers of stripe-shape irradiation areas of the m parallax images projected to the observation position, movement of the observer is predicted based on information thus detected, and the synthetic parallax image is displayed as being switched based thereon.

9. A stereoscopic image display apparatus comprising a visual point position detecting mechanism, said display apparatus being arranged to form a mask pattern having a plurality of aperture portions and shield portions arranged horizontally and vertically at a predetermined pitch on a display surface of an optical modulator having a discrete pixel structure, irradiate the optical modulator with a beam from light source means to obtain a patterned beam, make the patterned beam pass through an optical system comprising a vertical cylindrical lens array consisting of vertical cylindrical lenses having a generating-line along the vertical direction and a horizontal cylindrical lens array consisting of horizontal cylindrical lenses having a generating-line along the horizontal direction to illuminate a display having a discrete pixel structure and displaying a synthetic parallax image by use of scanning lines, guide beams based on the parallax image displayed on the display to the right eye and to the left eye of an observer, and permit stereoscopic observation of image information displayed on the display, wherein said synthetic parallax image is comprised of m parallax images where m is an integer not less than 2 and a lens pitch of the horizontal cylindrical lens array is $m \times n$ times a vertical width of the aperture portions of the mask pattern where n is an integer.

10. The stereoscopic image display apparatus according to Claim 9, wherein a pattern shape of the mask pattern of the optical modulator is changed according to visual point position information outputted from the visual point position detecting mechanism according to positions of visual points of the observer.

11. The stereoscopic image display apparatus according to Claim 9, wherein a horizontal width of stripe-shape irradiation areas of the m parallax images projected to an observation position of the observer is set to be equal to or smaller than a distance between the eyes of the observer.

12. The stereoscopic image display apparatus according to Claim 9, wherein the plural parallax images forming the synthetic parallax image are images observed from visual point positions spaced corresponding to a distance set to be equal to or smaller than a distance between the eyes.

13. The stereoscopic image display apparatus according to Claim 9, wherein a pattern shape of the mask pattern of the optical modulator is changed according to an output from the visual point position detecting mechanism for detecting positions of visual points of the observer, whereby the parallax images guided to the both eyes of the observer are controlled so as to provide normal stereoscopy for the observer.

14. The stereoscopic image display apparatus according to Claim 13, wherein each aperture portion of the mask pattern of the optical modulator is comprised of a plurality of pixels, whereby each stripe-shape irradiation area projected to an observation position is controlled to be divided into a plurality of areas.

15. The stereoscopic image display apparatus according to Claim 9, comprising switching means for changing the contents of the synthetic parallax image according to visual point position information outputted from the visual point position detecting mechanism according to positions of visual points of the observer where the number of parallax images is m or more.

16. The stereoscopic image display apparatus according to Claim 9, wherein when said m parallax images are projected into m vertical stripe-shape areas at an observation position, a pattern shape of said mask pattern is switched periodically and in synchronism therewith, the parallax images displayed on said display device are displayed as being switched, whereby the parallax images projected into the same areas in the vertical stripe-shape parallax images projected to the observation position are always the same parallax images.

# FIG. 1

# FIG. 2

EP 0 977 445 A2

# FIG. 3

EP 0 977 445 A2

# FIG. 4

# FIG. 5

# FIG. 6

# FIG. 7

# FIG. 8

## FIG. 9

210

Lv1

Lv2

220

230

Vl

240
241

Vm

242 243

250

## FIG. 10

# FIG. 11

FIG. 12

EP 0 977 445 A2

## FIG. 13

G3   G2   G1   G3   G2   G1   G3   G2   G1

1    2    3    4    5    6    7    8    9

Er   El

## FIG. 14

G3   G2   G1   G3   G2   G1   G3   G2   G1

1    2    3    4    5    6    7    8    9

Er   El

## FIG. 15

G3   G2   G1   G3   G2   G1   G3   G2   G1

1    2    3    4    5    6    7    8    9

Er   El

# FIG. 16

G3  G2  G1  G3  G2  G1  G3  G2  G1

1  2  3  4  5  6  7  8  9

Er  El

# FIG. 17

GS3  c  c  GS2

G3  GS1
G2
G3  G2  G1  G1  G3  G2  G1

1  2  3  4  5  6  7  8  9

Er  El

G3
G2
G1  211
G3
G2
G1

# FIG. 18

# FIG. 19

# FIG. 20

# FIG. 21

# FIG. 22

# FIG. 23

# FIG. 24

# FIG. 25

# FIG. 26

# FIG. 27

# FIG. 28

# FIG. 29

# FIG. 30

# FIG. 31

# FIG. 32

EP 0 977 445 A2

EP 0 977 445 A2

# FIG. 33

# FIG. 34

# FIG. 35

# FIG. 36

# FIG. 37

# FIG. 38

# FIG. 39

# FIG. 40

# FIG. 41

FIG. 42

# FIG. 43

# FIG. 44

# FIG. 45

# FIG. 46

# FIG. 47

# FIG. 48

# FIG. 49

# FIG. 50

# FIG. 51

EP 0 977 445 A2

# FIG. 52

# FIG. 53

# FIG. 54

# FIG. 55

## FIG. 56

## FIG. 57

FIG. 58

# FIG. 59

G2   G1   G2   G1   G2   G1

584

1 2 3 4 5 6 7 8 9 10 11 12 13 14 15 16 17 18

Er   El

# FIG. 60

G2   G1   G2   G1   G2   G1

584

1 2 3 4 5 6 7 8 9 10 11 12 13 14 15 16 17 18

Er   El

# FIG. 61

# FIG. 62

# FIG. 63

# FIG. 64

# FIG. 65

# FIG. 66

# FIG. 67

## FIG. 68

## FIG. 69

# FIG. 70

# FIG. 71

# FIG. 72

# FIG. 73

# FIG. 74

EP 0 977 445 A2

# FIG. 75

81